Europäisches Patentamt

European Patent Office

Office européen des brevets

(19)

(11) EP 1 457 990 A1

(12) EUROPEAN PATENT APPLICATION
published in accordance with Art. 158(3) EPC

(43) Date of publication:
15.09.2004 Bulletin 2004/38

(51) Int Cl.⁷: G11B 27/034, G11B 20/10, G11B 20/12, H04N 5/85, H04N 5/92

(21) Application number: 02783567.7

(22) Date of filing: 19.11.2002

(86) International application number:
PCT/JP2002/012038

(87) International publication number:
WO 2003/044796 (30.05.2003 Gazette 2003/22)

(84) Designated Contracting States:
AT BE BG CH CY CZ DE DK EE ES FI FR GB GR IE IT LI LU MC NL PT SE SK TR

(30) Priority: 20.11.2001 JP 2001354446
05.12.2001 JP 2001371764
19.09.2002 JP 2002274086
03.10.2002 JP 2002291642
18.10.2002 JP 2002304926

(71) Applicant: MATSUSHITA ELECTRIC INDUSTRIAL CO., LTD.
Kadoma-shi, Osaka 571-8501 (JP)

(72) Inventor: ITOH, Masanori
Moriguchi-shi, Osaka 570-0096 (JP)

(74) Representative: Tothill, John Paul
Frank B. Dehn & Co.
179 Queen Victoria Street
London EC4V 4EL (GB)

(54) AUDIO/VIDEO INFORMATION RECORDING/REPRODUCING APPARATUS AND METHOD, AND RECORDING MEDIUM IN WHICH INFORMATION IS RECORDED BY USING THE AUDIO/VIDEO INFORMATION RECORDING/REPRODUCING APPARATUS AND METHOD

(57) An audio/video information recording and reproducing apparatus and method are provided, in which a post-recording function can be realized on an optical disc (131) easily even with an inexpensive disc drive having a seek time at a relative low speed. In the case of recording a video file, the video file is recorded on an optical disc (131) continuously for a period of time related to three times or more the seek time. Then, in the case of recording an audio for lip-sync, the audio for lip-sync is recorded continuously by a predetermined data size, and simultaneously, the recorded video file is reproduced, whereby real-time continuous reproduction and recording are performed simultaneously. Because of this, in the case of reproducing the audio for lip-sync, simultaneous reproduction of a video file and an audio file can be assured.

FIG. 1

**Description**

<u>Technical Field</u>

The present invention relates to an audio/video information recording and reproducing apparatus and method for compressing a video signal and an audio signal in real time to record them on a recording medium such as an optical disc or the like, and decompressing a video signal and an audio signal recorded on a recording medium to reproduce them, and a recording medium on which information is recorded using the audio/video information recording and reproducing apparatus and method.

<u>Background Art</u>

As a method for compressing video data at a low bit rate, there is a system stream defined by the MPEG2 standard (ISO/IEC 13818-1). As the system stream, three kinds of streams: a program stream, a transport stream, and a PES (Packetized Elementary Stream) are defined.

On the other hand, as a recording medium replacing a magnetic tape, optical discs such as a phase-change optical disc (e.g., a DVD-RAM and a MVDISC), a magnetooptical disc (MO), and the like are receiving attention. For example, as the standard for recording a video on a DVD-RAM, there is a VIDEO RECORDING standard (DVD Specifications for Rewritable/Re-recordable Discs Part 3 VIDEO RECORDING Version 1.0 September 1999). This standard is used for recording/reproducing a video file composed of a program stream of the MPEG2 standard with respect to a DVD-RAM disc. Hereinafter, conventional technical contents including the technical contents of the VIDEO RECORDING standard will be described, in terms of the case where a video file composed of a transport stream of the MPEG2 is recorded/reproduced with respect to a phase-change optical disc (hereinafter, this will be merely referred to as an "optical disc" unless otherwise confused). Furthermore, it is assumed that a video is compressed under the MPEG2 of ISO/IEC I3818-1, and in the case where an audio is compressed, the audio is compressed under the MPEG2-AAC (Advanced Audio Coding) of ISO/IEC 13818-7.

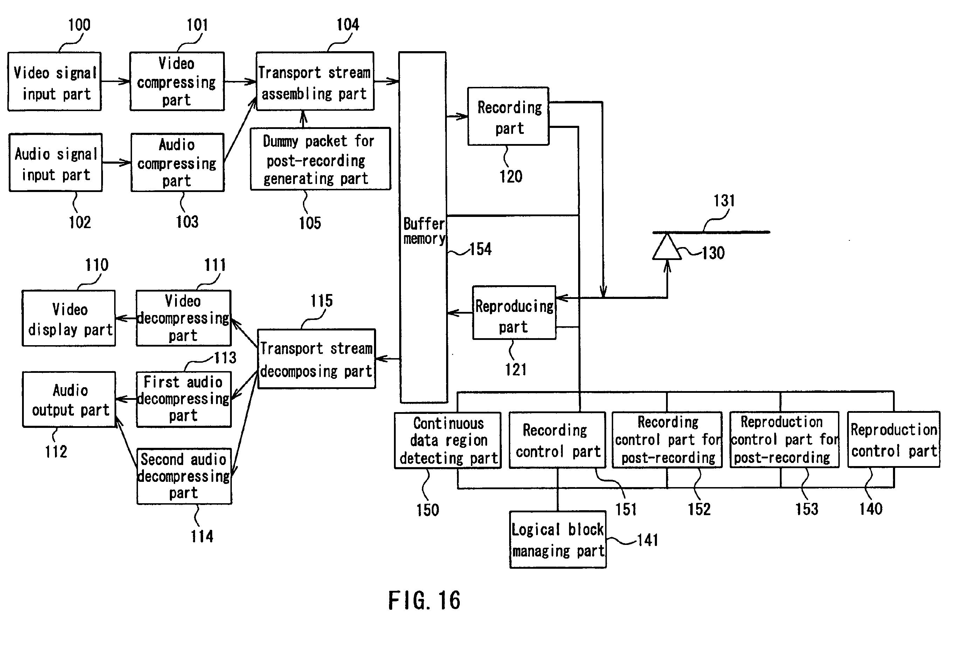

FIG. 16 is a diagram showing a configuration of a conventional audio/video information recording and reproducing apparatus using a phase-change optical disc. During recording of a video signal and an audio signal, signals input from a video signal input part 100 and an audio signal input part 102 are compressed respectively in a video compressing part 101 and an audio compressing part 103. Then, in a transport stream assembling part 104, a dummy packet generated by a dummy packet for post-recording generating part 105 is mixed with the results of compression to create a transport stream. The transport stream is written on a phase-change optical disc 131 via a buffer memory 154, a recording part 120, and a pickup 130.

During reproduction of a video signal and an audio signal, a transport stream obtained via the pickup 130, a reproducing part 121, and the buffer memory 154 is separated into a video signal and an audio signal in a transport stream decomposing part 115, and output respectively to a video display part 110 and an audio output part 112 via a video decompressing part 111 and a first audio decompressing part 113. Furthermore, in the case where a back-audio (described later) is recorded in a transport stream, a second audio decompressing part 114 is used for reproducing the back-audio.

During recording of a video signal and an audio signal, a recording control part 151 controls the recording part 120, a continuous data region detecting part 150, and a logical block managing part 141, whereby recording is performed. At this time, the continuous data region detecting part 150 checks the use status of sectors managed by the logical block managing part 141 to detect a physically continuous available region in accordance with an instruction of the recording control part 151.

During reproduction of a video signal and an audio signal, a reproduction control part 140 controls the reproducing part 121 and the recording part 120, whereby reproduction is performed. Furthermore, a recording control part 152 for post-recording and a reproduction control part 153 for post-recording are started during post-recording (described later).

Hereinafter, "recording of a video signal and an audio signal" will be referred to as "recording of a moving image signal". Similarly, "recording of a video and an audio" will be referred to as "recording of a moving image".

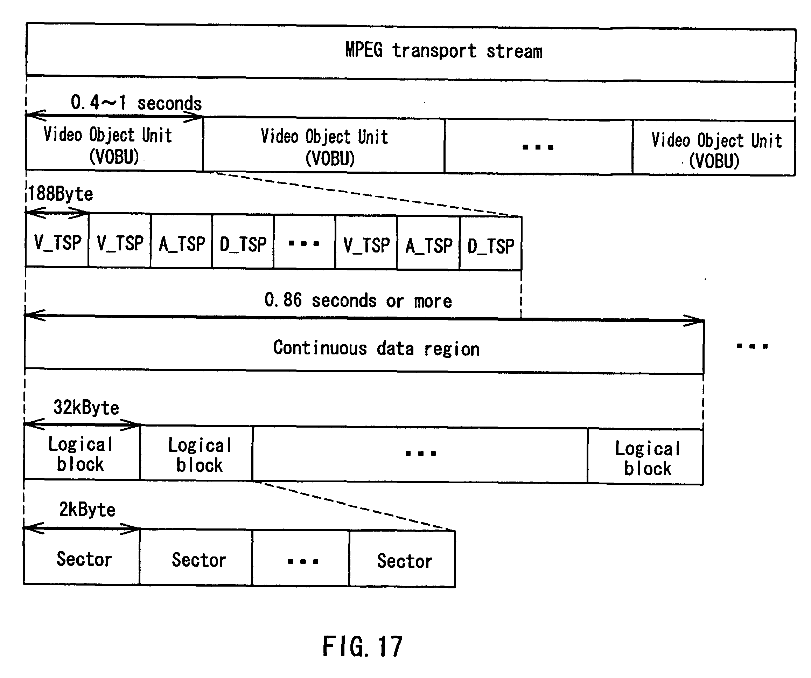

Furthermore, FIG. 17 shows a recording format in the case of recording a video in real time on the phase-change optical disc 131. The phase-change optical disc 131 is composed of sectors of 2 kbytes. Sixteen sectors are handled as one logical block (32 kbytes), and an error correction code is provided on a logical block basis, whereby the video is recorded on the phase-change optical disc 131. Furthermore, a logical block that is physically continuous for a particular period of time (e.g., 0.86 seconds as described later) or longer in terms of a maximum recording and reproducing rate is kept as one continuous data region, and a Video Object Unit (hereinafter, referred to as "VOBU") composed of an MPEG transport stream of a reproduction time (display time) of 0.4 to 1 seconds is recorded successively in the above region. It is assumed that one VOBU contains video and audio compressed data that in principal can be decoded independently. More specifically, it is assumed that video and audio compressed data are completed in one VOBU.

One VOBU is composed of a transport packet that is lower-order hierarchy of an MPEG transport stream on a basis of 188 bytes. The transport packet is composed of three kinds of packets: a video transport packet (V_TSP) in which video compressed data is stored, an audio transport packet (A_TSP) in which audio compressed data is stored, and a dummy audio transport packet (D_TSP). Furthermore, one VOBU contains all V_TSP, A_TSP, and D_TSP of the corresponding time. Furthermore, the data size of one VOBU is varied in a range of a maximum recording and reproducing rate or less, if a video has a variable bit rate. On the other hand, if a video has a fixed bit rate, the data size of one VOBU substantially is constant.

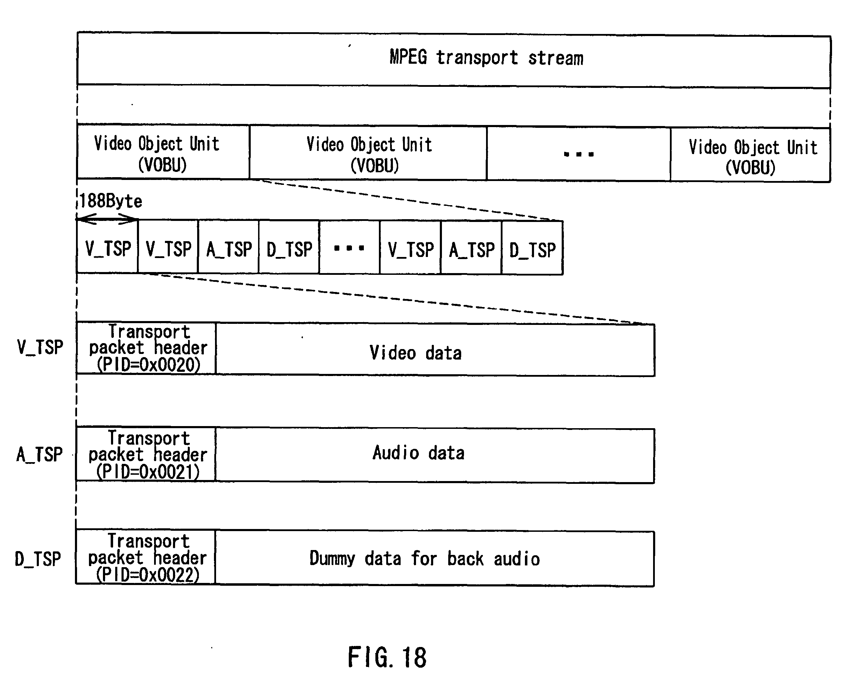

FIG. 18 shows the detail of V_TSP, A_TSP, and D_TSP. V_TSP is composed of a transport packet header and video data. A_TSP is composed of a transport packet header and audio data. D_TSP is composed of a transport packet header and dummy data for a back-audio. The difference among V_TSP, A_TSP, and D_TSP is identified by PID (Packet ID) in the transport packet header. For example, as shown in FIG. 18, V_TSP, A_TSP, and D_TSP are identified respectively by being assigned PID = "0x0020" PID = "0x0021", and PID = "0x0022".

The continuous data region detecting part 150 of the audio/video information recording and reproducing apparatus shown in FIG. 16 detects a subsequent continuous data region again at a time when the amount of the remaining region of one continuous data region becomes small. When one continuous data region is full, data is written in a subsequent continuous data region.

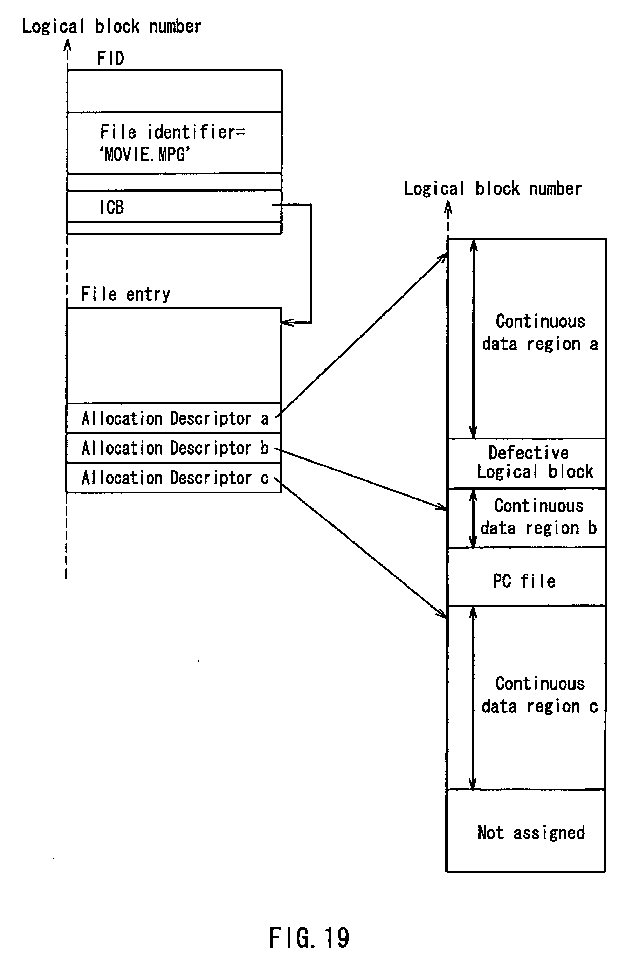

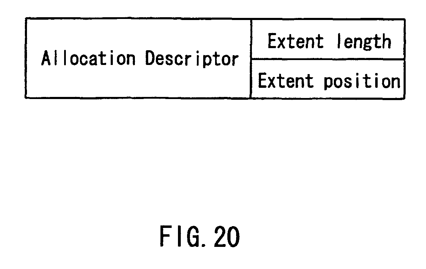

Furthermore, FIG. 19 shows a state in which recorded contents on an optical disc are managed by a UDF (Universal Disk Format) file system. Herein, one MPEG transport stream is recorded as a file "MOVIE.MPG" by each one operation of ON and OFF of a recording start button. Regarding a file, a file name and the position of a file entry are managed by an FID (File Identifier Descriptor). Furthermore, by using an Allocation Descriptor in a file entry, one file and three continuous data regions *a*, *b*, and *c* constituting the file are managed. The reason why the continuous data region is divided into three will be described below. The configuration of each Allocation Descriptor is composed of an Extent Length and an Extent Position, as shown in FIG. 20.

When the recording control part 151 finds a defective logical block during recording in the continuous data region *a*, the recording control part 151 skips the defective logical block, and continues writing data from the leading end of the continuous data region *b*. Furthermore, when the recording control part 151 may encounters a recording region of a PC file during recording in the continuous data region *b*, the recording control part 151 continues writing data from the leading end of the continuous data region *c*. As a result, the file "MOVIE.MPG" is composed of three continuous data regions *a*, *b*, and *c*.

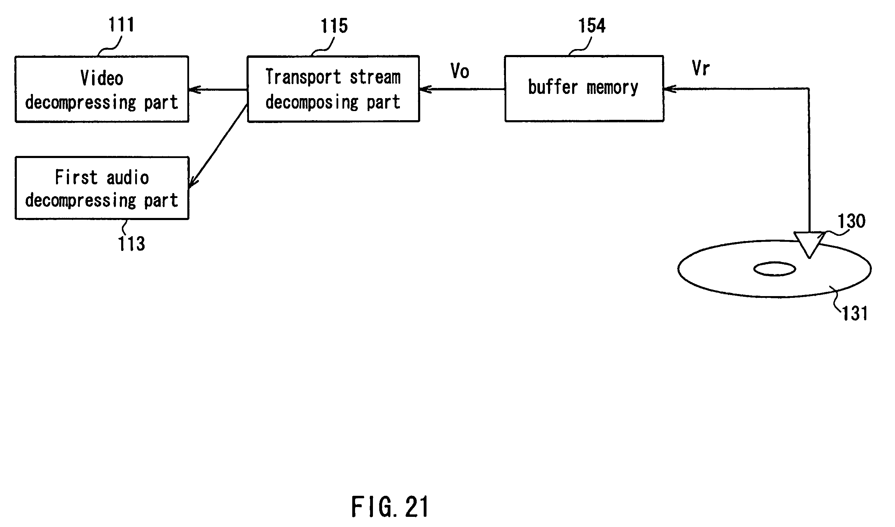

FIG. 21 shows an operation outline during reproduction of a file. During reproduction, the reproduction control part 140 simultaneously performs an operation of reading data from the optical disc 131 to the buffer memory 154 and an operation of reproduction of data due to the movement thereof from the buffer memory 154 to the transport stream decomposing part 115. In this case, a data reading speed Vr is set to be higher than a data reproducing speed Vo so that there is no absence of data to be reproduced (underflow) in the buffer memory 154. Thus, when continuous data reading and continuous data reproduction are continued, data to be reproduced can be kept in excess corresponding to the speed difference between the data reproducing speed Vo and the data reading speed Vr. By using such data that can be kept in excess as reproduction data while data reading stops due to a jump of the pickup 130, continuous reproduction can be realized.

More specifically, in the case where the data reading speed Vr is 24 Mbps, the data reproducing speed Vo is 10 Mbps, and the maximum movement time of the pickup 130 is 0.5 seconds, excess reproduction data of 5 M bits is required during the movement of the pickup. In order to keep such excess reproduction data, continuous reading for 0.36 seconds is required. More specifically, continuous reading for a period of time obtained by dividing 5 M bits by the difference between the data reading speed 24 Mbps and the data reproducing speed 10 Mbps is necessary.

Herein, during the continuous reading for 0.36 seconds, 8.6 M bits (i.e., 0.86 seconds in terms of a reproducing speed of 10 Mbps) of reproduction data are read. Thus, by keeping a continuous data region of 0.86 seconds or longer and recording a moving image of at most 10 Mbps in the region, continuous data reproduction can be ensured.

The maximum movement time of the pickup 130 indicates the movement time of a disc between the innermost track and the outermost track. Furthermore, it is assumed that this period of time also includes latency time.

At some midpoint in the continuous data region, there may be several defective logical blocks. In this case, it is necessary to keep a continuous data region slightly larger than that corresponding to 0.86 seconds, in expectation of a reading time required for reading such defective logical blocks during reproduction.

Furthermore, as one of the functions generally provided in a consumer movie, there is post-recording. The post-recording is a function of lip-syncing for an audio corresponding to a video previously recorded (hereinafter, referred to as a "front-audio") in a newly recorded audio (hereinafter, referred to as a "back-audio").

The post-recording generally is composed of the following three steps. As the first step, a video is recorded first in a recording mode capable of performing post-recording (hereinafter, referred to as "post-recording mode recording"). As the second step, a back-audio synchronized with the video is recorded while the recorded video is being watched (hereinafter, referred to as "post-recording recording"). As the third step, the video and the back-audio in the second step are synchronized with each other to be reproduced (hereinafter, referred to as "post-recording reproduction". Through these steps, dubbing is realized.

Herein, in the first step, the recording control part 152 for post-recording records an MPEG transport stream containing V_TSP, A_TSP, and D_TSP (e.g., see Patent Document 1). In the second step, the recording control part 152 for post-recording replaces D_TSP by A_TSP for a back-audio, and records it on the optical disc 131. In the third step, the reproduction control part 153 for post-recording controls so that A_TSP for a front-audio, A_TSP for a back-audio, and V_TSP are given to the transport stream decomposing part 115, whereby dubbing is realized.

Hereinafter, a file containing a video and an audio to be recorded during the post-recording mode recording will be referred to as a moving image file.

Furthermore, in the case where it is not necessary to perform post-recording, a moving image file composed of A_TSP and V_TSP is recorded without including D_TSP.

Furthermore, in the case there the reproduction control part 140 reproduces a moving image file recorded in a post-recording mode, A_TSP and V_TSP are given to the transport stream decomposing part 115 without giving D_TSP thereto.

During the post-recording recording, in the case where a back-audio is recorded while a video is being watched, it is necessary to perform re-recording processing of a video including a back-audio simultaneously with reproduction processing of a video. Specifically, the reproduction control part 153 for post-recording stores a stream to be reproduced on a buffer, replaces D_TSP in the stream by A_TSP for a back-audio, and writes it again on the disc. That is, it is necessary to perform the continuous recording simultaneously at the same rate as that of the continuous reproduction at a recording rate of a video. In order to realize this simultaneous recording and reproduction processing, it is necessary to realize a high transfer rate and a high-speed seek time, and an expensive disc drive is required.

Furthermore, when a moving image stream reproduced by the post-recording reproduction is output to an IEEE 1394 interface, in order to synthesize (multiplex) a back-audio with the moving image stream, it is necessary to perform MPEG system encoding again, which complicates the output processing to the IEEE 1394 interface.

Disclosure of Invention

The present invention has been achieved in view the above problems, and its object is to provide an audio/video information recording and reproducing apparatus and method capable of easily realizing a post-recording function on an optical disc even with an inexpensive disc drive having a relatively low-speed seek time, easily performing editing such as combination, division, and the like of audio files, and making it unnecessary to perform MPEG system encoding when outputting a moving image stream to an IEEE 1394 interface, thereby easily outputting the moving image stream, and a recording medium on which information is recorded using the audio/video information recording and reproducing apparatus.

In order to achieve the above-mentioned object, a first audio/video information recording and reproducing apparatus according to the present invention includes: a video recording part for recording video information on a recording medium as a video file; an audio recording part for recording audio information on the recording medium as an audio file; a video reproducing part for reproducing the video information recorded on the recording medium continuously in real time; and a recording part for post-recording for simultaneously performing reproduction of the video information and recording of the audio information related to the video information. The video recording part includes: a video continuous data region detecting part for detecting a video continuous data region composed of a plurality of physically continuous recording units capable of recording video information for a period of time or longer required for keeping excessively video information corresponding to a total period of a time that is three times a maximum movement time of a reading and writing head and a reading time of one audio continuous data region; and a video recording control part for designating a recording unit number of the video continuous data region in which the video information is to be recorded. The audio recording part includes: an audio continuous data region detecting part for detecting the audio continuous data region that is composed of the plurality of physically continuous recording units capable of recording audio information, and that has a data size in a predetermined range; and an audio recording control part for continuously recording the audio information on the plurality of audio continuous data regions. The video recording part records the video information, and the recording part for post-recording simultaneously performs real-time continuous reproduction of the video information and recording of the audio information, while alternately performing reproduction of the video information recorded in the video continuous data region and recording of the audio information in the audio continuous data region.

In the first audio/video information recording and reproducing apparatus, it is preferable that the recording part for post-recording further records boundary information representing a boundary of the audio continuous data

EP 1 457 990 A1

region together with the audio information.

In order to achieve the above-mentioned object, a second audio/video information recording and reproducing apparatus according to the present invention includes: a video recording part for recording video information on a recording medium as a video file; an audio recording part for recording audio information on the recording medium as an audio file; a video reproducing part for reproducing the video information recorded on the recording medium continuously in real time; an audio reproducing part for reproducing the audio information recorded on the recording medium continuously in real time; and a reproducing part for post-recording for simultaneously performing reproduction of the video information and reproduction of the audio information related to the video information. The video recording part includes: a video continuous data region detecting part for detecting a video continuous data region composed of a plurality of physically continuous recording units capable of recording video information for a period of time or longer required for keeping excessively video information corresponding to a total period of a time that is three times a maximum movement time of a reading and writing head and a reading time of one audio continuous data region; and a video recording control part for designating a recording unit number of the video continuous data region in which the video information is to be recorded. The audio recording part includes: an audio continuous data region detecting part for detecting the audio continuous data region that is composed of the plurality of physically continuous recording units capable of recording audio information, and that has a data size in a predetermined range; and an audio recording control part for continuously recording the audio information on the plurality of audio continuous data regions. The video recording part records the video information. The audio recording part records the audio information related to the video information. The reproducing part for post-recording simultaneously reproduces the video and the audio continuously in real time, while alternately reading the video information recorded in the video continuous data region and the audio information recorded in the audio continuous data region.

In the second audio/video information recording and reproducing apparatus, it is preferable that the audio recording part further records boundary information representing a boundary of the audio continuous data region together with the audio information, and the reproducing part for post-recording further refers to the boundary information when reading the audio information recorded in the audio continuous data region.

In order to achieve the above-mentioned object, a first audio/video information recording and reproducing method according to the present invention for recording video information on a recording medium as a video file, and simultaneously performing real-time continuous reproduction of the video information recorded on the recording medium and recording of audio information related to the video information on the recording medium as an audio file includes the steps of: detecting a video continuous data region composed of a plurality of physically continuous recording units capable of recording video information for a period of time or longer required for keeping excessively video information corresponding to a total period of a time that is three times a maximum movement time of a reading and writing head and a reading time of one audio continuous data region; designating a recording unit number of the video continuous data region in which the video information is to be recorded; detecting the audio continuous data region that is composed of the plurality of physically continuous recording units capable of recording audio information, and that has a data size in a predetermined range; and continuously recording the audio information on the plurality of audio continuous data regions. In this method, real-time continuous reproduction of the video information and recording of the audio information are performed simultaneously, while reproduction of the video information recorded in the video continuous data region and recording of the audio information in the audio continuous data region are performed alternately.

It is preferable that the first audio/video information recording and reproducing method further includes the step of recording boundary information representing a boundary of the audio continuous data region together with the audio information.

In order to achieve the above-mentioned object, a second audio/video information recording and reproducing method according to the present invention is for recording video information on a recording medium as a video file, recording audio information on the recording medium as an audio file, and simultaneously reproducing the video information and the audio information recorded on the recording medium continuously in real time. The method includes the steps of detecting a video continuous data region composed of a plurality of physically continuous recording units capable of recording video information for a period of time or longer required for keeping excessively video information corresponding to a total period of a time that is three times a maximum movement time of a reading and writing head and a reading time of one audio continuous data region; designating a recording unit number of the video continuous data region in which the video information is to be recorded; detecting the audio continuous data region that is composed of the plurality of physically continuous recording units capable of recording audio information, and that has a data size in a predetermined range; and continuously recording the audio information on the plurality of audio continuous data regions. In this method, a video and an audio are simultaneously reproduced continuously in real-time, while the video information recorded in the video continuous data region and the audio information recorded in the audio continuous data region are read alternately.

It is preferable that the second audio/video information recording and reproducing method further includes the steps of: recording boundary information representing a boundary of the audio continuous data region together with the audio information; and referring to the boundary information to read the audio information recorded in the audio continuous data region.

According to the configurations of the above-mentioned first and second audio/video information recording and reproducing apparatus, and the first and second audio/video information recording and reproducing method, a post-recording function can be realized on an optical disc easily with an inexpensive disc drive having a seek time at a relatively low speed, and editing such as combination, division, and the like of an audio file can be performed easily.

In order to achieve the above-mentioned object, a third audio/video information recording and reproducing apparatus includes an audio/video information recording part for recording audio/video information containing an audio as an MPEG transport stream composed of an MPEG transport packet. In a case of recording an audio and a video, the audio/video information recording part performs recording in such a manner that one audio frame is composed of a fixed number of transport packets containing a PES packet provided with one Presentation Time Stamp (PTS), a packet header of a leading transport packet among the fixed number of transport packets is set to be a fixed data size, and further, a Program Clock Reference (PCR) is not contained in a transport packet containing audio information, and in a case of recording an audio, the audio/video information recording part performs recording in such a manner that one audio frame is composed of the fixed number of transport packets containing one PES packet, a packet header of a leading transport packet among the fixed number of transport packets is set to be a fixed data size, and the packet header contains the PCR at a predetermined period.

In order to achieve the above-mentioned object, a fourth audio/video information recording and reproducing apparatus according to the present invention includes: an audio A recording part for performing recording in such a manner that one audio frame is composed of a fixed number of transport packets containing a PES packet provided with one Presentation Time Stamp (PTS), a packet header of a leading transport packet among the fixed number of transport packets is set to be a fixed data size, and further, a Program Clock Reference (PCR) is not contained in a transport packet containing audio information; an audio B recording part for performing recording in such a manner that one audio frame is composed of the fixed number of transport packets containing one PES packet, a packet header of a leading transport packet among the fixed number of transport packets is set to be a fixed data size, and the packet header contains the PCR at a predetermined period; and a control part for post-recording for outputting an MPEG transport stream containing the audio A by replacing it with an audio B contained in another transport stream. The control part for post-recording outputs a predetermined data region among the transport packets containing the audio A by replacing the predetermined data region with data at a recording position corresponding to the transport packet of the audio B in synchronization with a leading end of each audio frame.

In the fourth audio/video information recording and reproducing apparatus, the predetermined data region is a payload part of the first transport packet, and an Adaptation Field Control Field, Adaptation Field, and payload part of the second and subsequent transport packets, among the fixed number of transport packets.

In order to achieve the above-mentioned object, in a third audio/video information recording and reproducing method according to the present invention for recording audio/video information containing an audio as an MPEG transport stream composed of an MPEG transport packet, in a case of recording an audio and a video, recording is performed in such a manner that one audio frame is composed of a fixed number of transport packets containing a PES packet provided with one Presentation Time Stamp (PTS), a packet header of a leading transport packet among the fixed number of transport packets is set to be a fixed data size, and further, a Program Clock Reference (PCR) is not contained in a transport packet containing audio information, and in a case of recording an audio, recording is performed in such a manner that one audio frame is composed of the fixed number of transport packets containing one PES packet, a packet header of a leading transport packet among the fixed number of transport packets is set to be a fixed data size, and the packet header contains the PCR at a predetermined period.

In order to achieve the above-mentioned object, a fourth audio/video information recording and reproducing method according to the present invention includes the steps of: performing recording in such a manner that one audio frame is composed of a fixed number of transport packets containing a PES packet provided with one Presentation Time Stamp (PTS), a packet header of a leading transport packet among the fixed number of transport packets is set to be a fixed data size, and further, a Program Clock Reference (PCR) is not contained in a transport packet containing audio information; performing recording in such a manner that one audio frame is composed of the fixed number of transport packets containing one PES packet, a packet header of a leading transport packet among the fixed number of transport packets is set to be a fixed data size, and the packet header contains the PCR at a predetermined period; and outputting a predetermined data region among the transport packets of an MPEG transport stream containing an audio A by replacing the predetermined data region with data at a recording position corresponding to the transport packet of an audio B contained in another transport stream in synchronization with a leading end of each audio frame.

In the fourth audio/video information recording and reproducing method, the predetermined data region is a payload part of the first transport packet, and an Adaptation Field Control Field, Adaptation Field, and payload part of the second and subsequent transport packets, among the fixed number of transport packets.

In order to achieve the above-mentioned object, on the first recording medium according to the present invention, information is recorded using one of the first to fourth audio/video information recording and reproducing apparatuses.

In order to achieve the above-mentioned object, on the second recording medium according to the present invention, information is recorded using one of the first to fourth audio/video information recording and reproducing apparatuses.

According to the configurations of the above-mentioned third audio/video information recording and reproducing apparatus and method, and the above-mentioned fourth audio/video information recording and reproducing apparatus and method, during post-recording reproduction, a moving image stream to be output to the IEEE 1394 interface can be created easily, and post-recording reproduction can be performed easily even in the audio/video information recording and reproducing apparatus.

Brief Description of Drawings

FIG. 1 is a block diagram showing a functional configuration of an audio/video information recording and reproducing apparatus according to Embodiment 1 of the present invention.

FIG. 2 is a block diagram related to post-recording mode recording in the audio/video information recording and reproducing apparatus according to Embodiment 1 of the present invention.

FIG. 3 is a block diagram related to post-recording recording in the audio/video information recording and reproducing apparatus according to Embodiment 1 of the present invention.

FIG. 4 is a block diagram related to post-recording reproduction in the audio/video information recording and reproducing apparatus according to Embodiment 1 of the present invention.

FIG. 5 shows a recording form of a moving image file during post-recording mode recording in the audio/video information recording and reproducing apparatus according to Embodiment 1 of the present invention.

FIG. 6 shows a recording form of a back-audio file during post-recording recording in the audio/video information recording and reproducing apparatus according to Embodiment 1 of the present invention.

FIG. 7 shows an operation model during post-recording recording in the audio/video information recording and reproducing apparatus according to Embodiment 1 of the present invention.

FIG. 8 shows a transition of a code amount in a moving image buffer memory and an audio buffer memory during post-recording recording in the audio/video information recording and reproducing apparatus according to Embodiment 1 of the present invention.

FIG. 9 shows an operation model during post-recording reproduction in the audio/video information recording and reproducing apparatus according to Embodiment 1 of the present invention.

FIG. 10 shows a transition of a code amount in a moving image buffer memory and an audio buffer memory during post-recording reproduction in the audio/video information recording and reproducing apparatus according to Embodiment 1 of the present invention.

FIG. 11 is a block diagram showing a functional configuration of an audio/video information recording and reproducing apparatus according to Embodiment 2 of the present invention.

FIG. 12 shows blocks related to post-recording recording in the audio/video information recording and reproducing apparatus according to Embodiment 2 of the present-invention.

FIG. 13 is a block diagram related to post-recording reproduction in the audio/video information recording and reproducing apparatus according to Embodiment 2 of the present invention.

FIG. 14 is a block diagram showing a functional configuration of an audio/video information recording and reproducing apparatus according to Embodiment 3 of the present invention.

FIG. 15 shows blocks related to post-recording reproduction in the audio/video information recording and reproducing apparatus according to Embodiment 3 of the present invention.

FIG. 16 is a block diagram showing a functional configuration of a conventional audio/video information recording and reproducing apparatus.

FIG. 17 shows a recording form of a moving image file during post-recording mode recording in the conventional audio/video information recording and reproducing apparatus.

FIG. 18 shows a configuration of a transport stream of a moving image file during post-recording mode recording in the conventional audio/video information recording and reproducing apparatus.

FIG. 19 shows a state in which a moving image file is managed by a UDF file system.

FIG. 20 shows a data configuration of an Allocation Descriptor of the UDF file system.

FIG. 21 shows an operation model during reproduction of a file in the conventional audio/video information recording and reproducing apparatus.

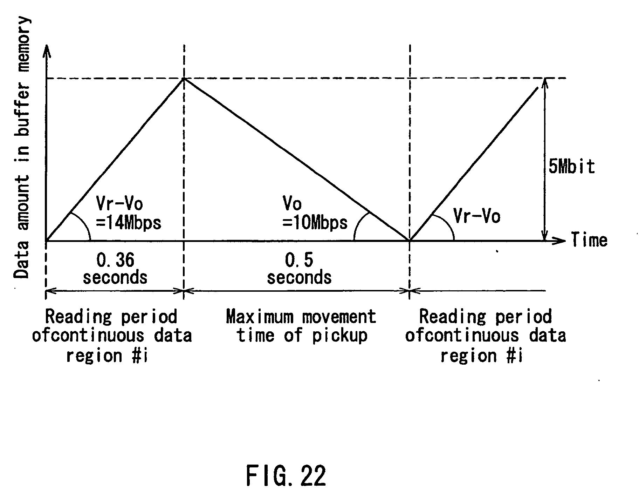

FIG. 22 shows a transition of a code amount in a moving image buffer memory and an audio buffer memory during post-recording reproduction in the conventional audio/video information recording and reproducing apparatus.

FIG. 23 shows a transition of a code amount in a moving image buffer memory and an audio buffer memory during post-recording reproduction in an audio/video information recording and reproducing apparatus according to Embodiment 4 of the present invention.

FIG. 24 shows a transition of a code amount in a moving image buffer memory and an audio buffer memory during post-recording reproduction in the audio/video information recording and reproducing apparatus according to Embodiment 1 of the present invention in the case where a longer continuous data region for a moving image is kept.

FIG. 25 is a data configuration diagram showing a modified example of a transport stream of a back-audio file in the audio/video information recording and reproducing apparatus according to Embodiment 1 of the present invention.

FIG. 26 shows a relationship between continuous data regions of a video file and a back-audio file in the audio/video information recording and reproducing apparatus according to Embodiment 1 of the present invention.

FIG. 27 shows a movement path of a pickup during post-recording reproduction in Embodiment 5 of the present invention.

FIG. 28 shows a data configuration of a back-audio file in Embodiment 5 of the present invention.

FIG. 29 shows a transition of a code amount in a moving image buffer memory and an audio buffer memory during post-recording reproduction in the audio/video information recording and reproducing apparatus according to Embodiment 5 of the present invention.

FIG. 30 shows an example of a reading data size of one continuous data region.

FIG. 31 shows a physical arrangement in a continuous data region for a video file and a back-audio file in the audio/video information recording and reproducing apparatus according to Embodiment 1 of the present invention.

FIG. 32 shows a transition of a code amount in a moving image buffer memory and an audio buffer memory during post-recording reproduction in the audio/video information recording and reproducing apparatus according to Embodiment 1 of the present invention.

FIG. 33 shows another data reading timing during post-recording reproduction in the audio/video information recording and reproducing apparatus according to Embodiment 1 of the present invention.

FIG. 34 shows a data reading timing during post-recording reproduction in the audio/video information recording and reproducing apparatus according to Embodiment 5 of the present invention.

FIG. 35 shows a data reading timing during post-recording reproduction in the audio/video information recording and reproducing apparatus according to Embodiment 6 of the present invention.

FIG. 36 shows a data size of a continuous data region in which post-recording reproduction can be performed in the audio/video information recording and reproducing apparatus according to Embodiment 5 of the present invention.

FIG. 37 shows a data size of a continuous data region in which post-recording reproduction can be performed in the audio/video information recording and reproducing apparatus according to Embodiment 1 of the present invention.

FIG. 38 shows another transition of a code amount in a moving image buffer memory and an audio buffer memory during post-recording reproduction in the audio/video information recording and reproducing apparatus according to Embodiment 1 of the present invention.

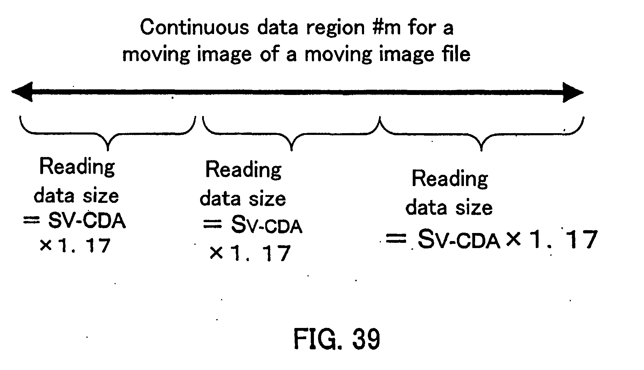

FIG. 39 shows an example of a reading data size of one continuous data region during post-recording reproduction in the audio/video information recording and reproducing apparatus according to Embodiment 5 of the present invention.

FIG. 40 is a block diagram showing a functional configuration of an audio/video information recording and reproducing apparatus according to Embodiment 7 of the present invention.

FIG. 41 shows a data configuration of a transport packet containing front-audio data and back-audio data of one frame contained in a moving image file in the audio/video information recording and reproducing apparatus according to Embodiment 7 of the present invention.

FIG. 42 shows a data configuration of a transport packet containing audio data of one frame contained in a back-audio file in the audio/video information recording and reproducing apparatus according to Embodiment 7 of the present invention.

FIG. 43 shows a system in which back-audio data of a moving image file is replaced with back-audio data of a back-audio file in the audio/video information recording and reproducing apparatus according to Embodiment 7 of the present invention.

FIG. 44 shows a data configuration of a chain of continuous data region in the audio/video information recording and reproducing apparatus according to Embodiment 1 of the present invention.

FIG. 45 shows a data configuration of a back-audio file composed of an MPEG program stream in the audio/video information recording and reproducing apparatus according to Embodiment 1 of the present invention.

FIG. 46 shows a processing procedure of a video buffer and an audio buffer performed by a post-recording reproduction control part for 100 msec. during post-recording reproduction in the audio/video information recording and reproducing apparatus according to Embodiment 1 of the present invention.

Best Mode for Carrying Out the Invention

Hereinafter, the present invention will be described by way of embodiments with reference to the drawings.

(Embodiment 1)

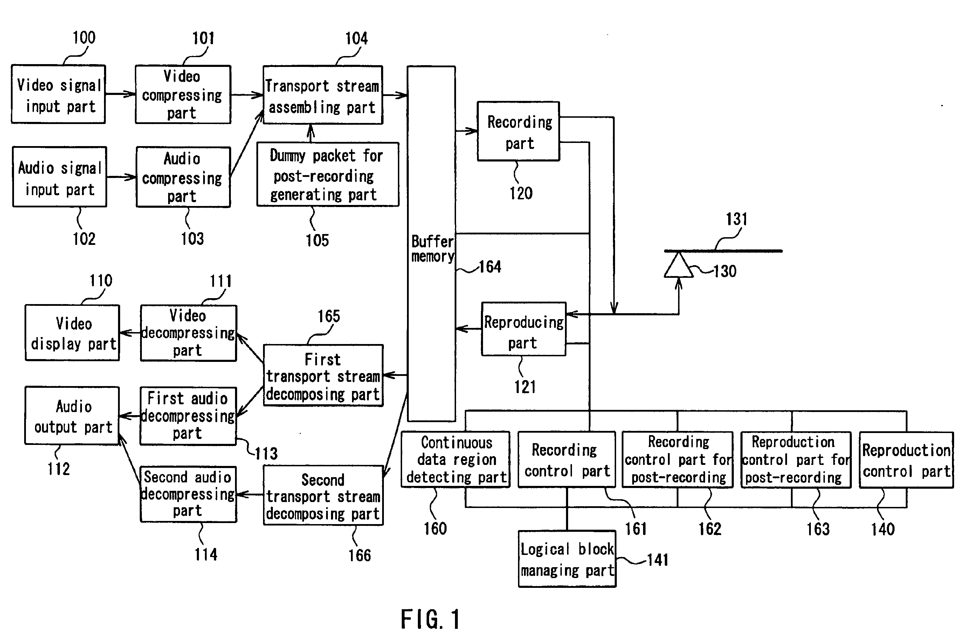

FIG. 1 is a block diagram showing a configuration of an audio/video information recording and reproducing apparatus according to Embodiment 1 of the present invention. The present embodiment differs from the conventional example (FIG. 16) in that a second transport stream decomposing part 166 further is provided, and a continuous data region detecting part 160, a recording control part 161, a recording control part 162 for post-recording, a reproduction control part 163 for post-recording, and a buffer memory 164, which are functionally different from those of the conventional example, are provided. Furthermore, it is assumed that the data reading speed of a reproducing part 121, the maximum reproducing rate of moving image data input to a first transport stream decomposing part 165, and the maximum movement time of a pickup 130 during a reading operation and a writing operation are the same as those in the conventional example.

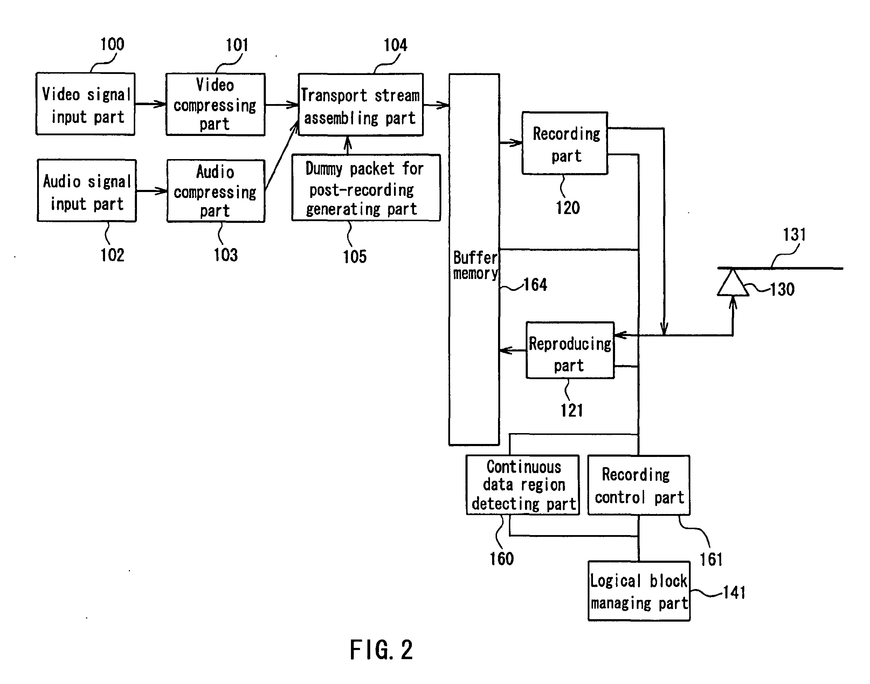

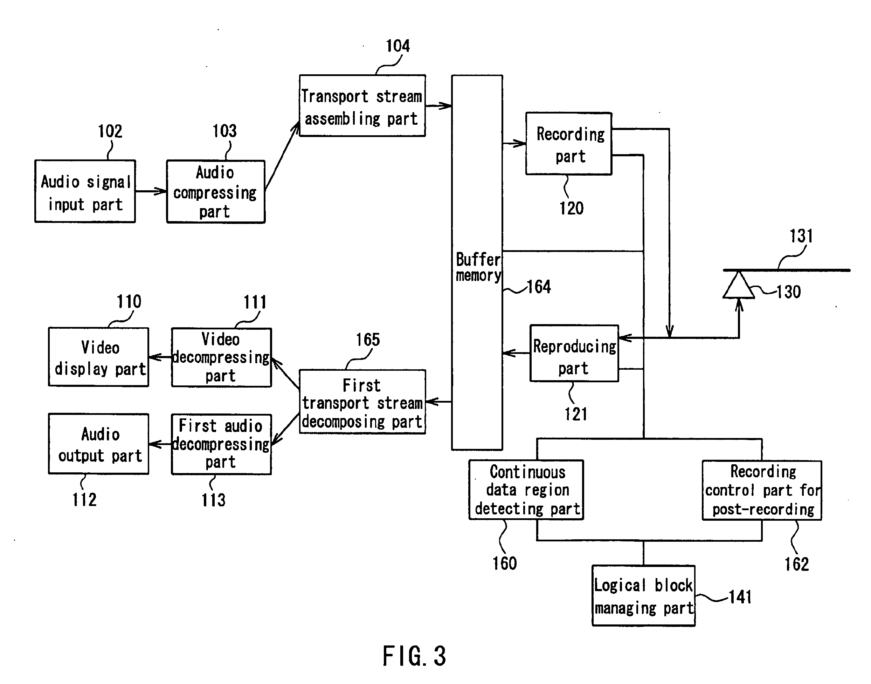

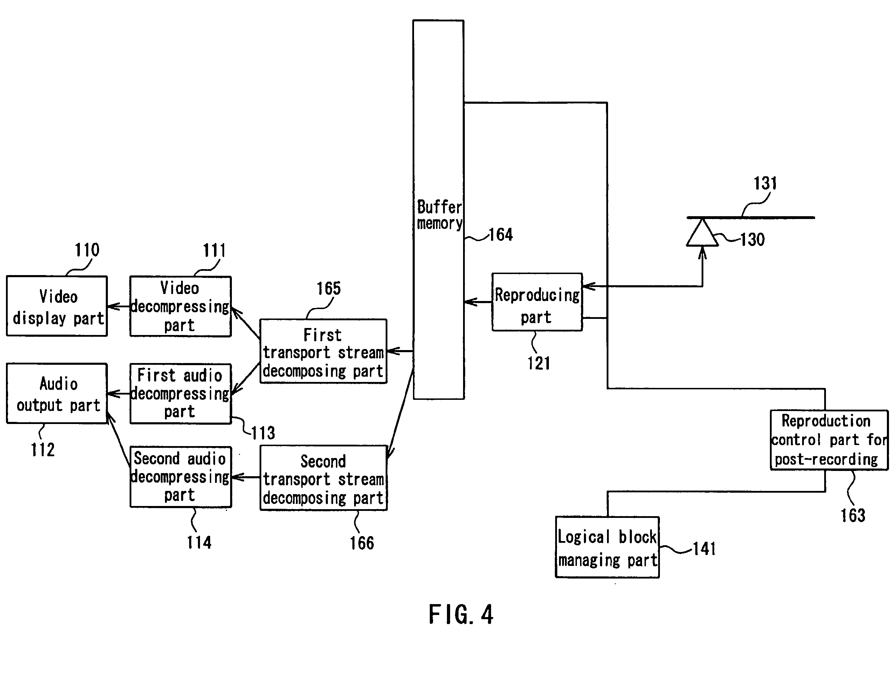

FIG. 2 shows blocks related to post-recording mode recording in the functional blocks shown in FIG. 1. FIG. 3 shows blocks related to post-recording recording among the functional blocks shown in FIG. 1. FIG. 4 shows blocks related to post-recording reproduction among the functional blocks shown in FIG. 1.

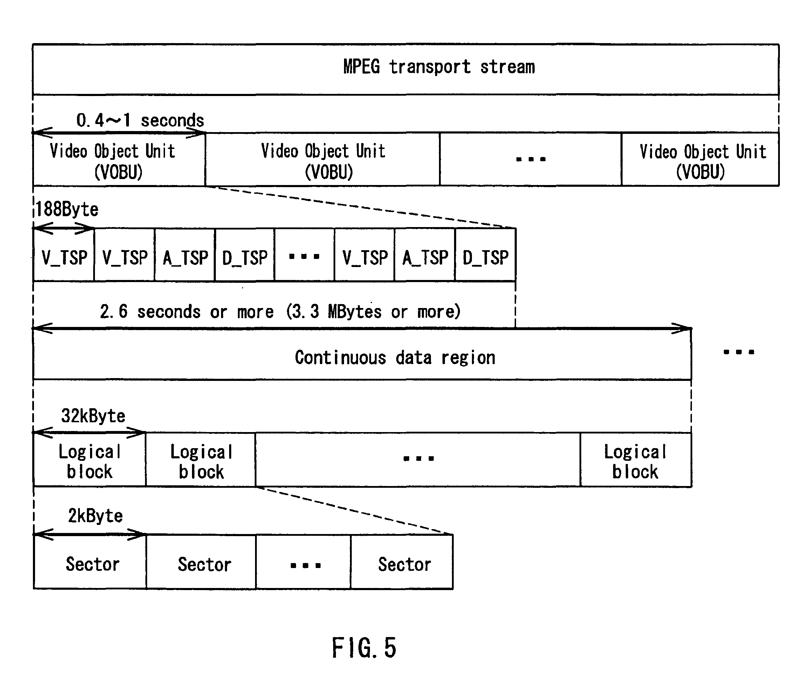

FIG. 5 shows a recording form of a video and an audio in the audio/video information recording and reproducing apparatus according to Embodiment 1 of the present invention. The difference with respect to the conventional example shown in FIG. 17 lies in the length (2.6 seconds or more) of a continuous data region. The other points (e.g., a VOBU is composed of V_TSP, A_TSP, and D_TSP) are the same.

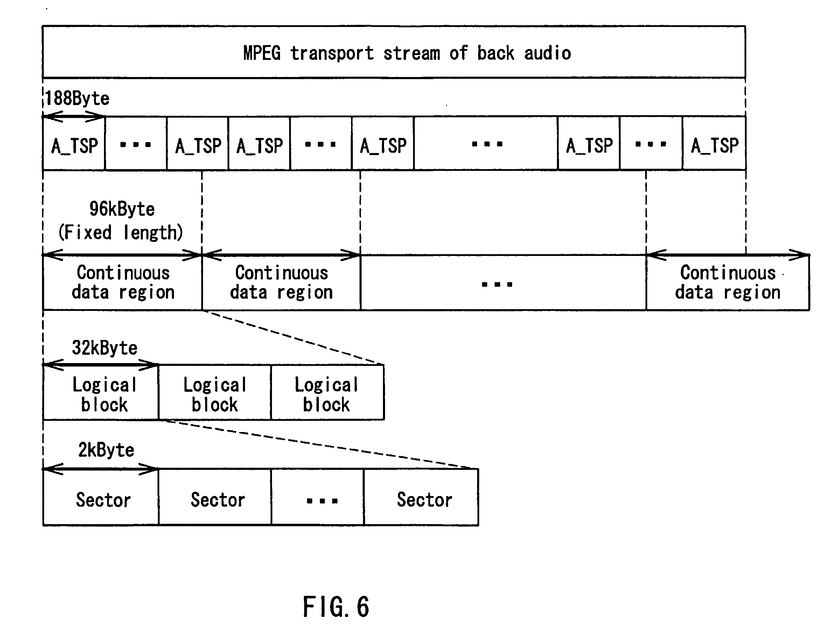

FIG. 6 shows a recording form of a back-audio file recorded during post-recording recording in Embodiment 1 of the present invention. The back-audio file is composed of A_TSP obtained by encoding a back-audio. Specifically, a transport packet header is added to audio data that is compressed and encoded by AAC (Advance Audio Coding) to form a transport stream. Furthermore, in a plurality of continuous data regions with a fixed length of 96 kbytes kept on the optical disc 131, the transport stream is recorded continuously. The continuous data regions of 96 kbytes may be separated physically. Although not shown in FIG. 6, PAT, PMT, and the like are packets indispensable to the transport stream, and contained in a back-audio file.

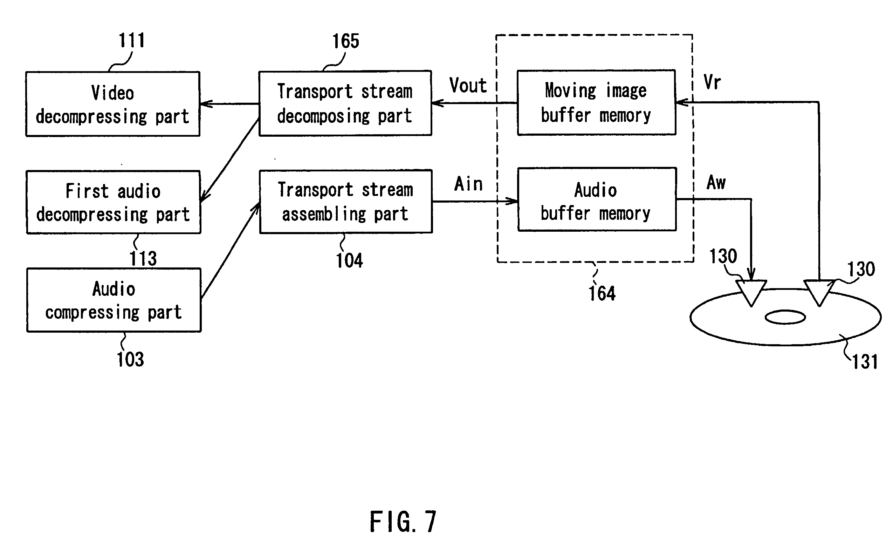

FIG. 7 shows an operation model during post-recording recording in Embodiment 1 of the present invention. Moving image data recorded on the optical disc 131 is taken in a moving image buffer memory at a speed Vr via the pickup 130, and transferred to the transport stream decomposing part 165 at a speed Vout. Furthermore, a video and an audio are reproduced from the moving image data by a video decompressing part 111 and a first audio decompressing part 113. On the other hand, an audio signal is converted to audio data by an audio compressing part 103, and taken in an audio buffer memory at a speed Ain via a transport stream assembling part 104. Furthermore, the audio data is written on the optical disc 131 via the pickup 130 at a speed Aw. Reading of moving image data and writing of audio data are realized by alternately switching one pickup 130 in a time divided manner. Herein, it is assumed that Vr > Vout, and Aw > Ain.

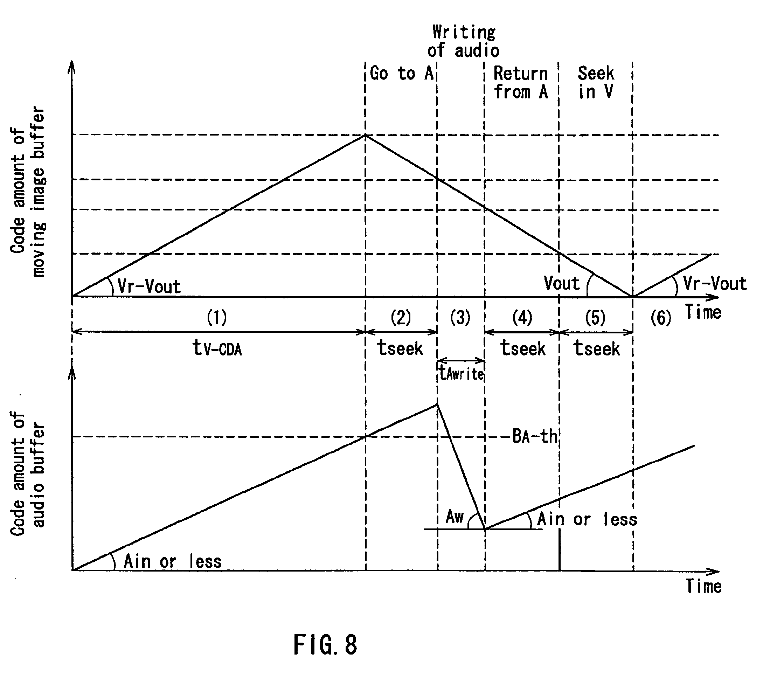

FIG. 8 shows a transition of a code amount in the moving image buffer memory and the audio buffer memory during post-recording recording in Embodiment 1 of the present invention. In FIG. 8, $t_{seek}$ represents the maximum movement time of the pickup 130, $t_{Awrite}$ represents the writing time of an audio file for a back-audio, and $t_{V-CDA}$ represents the reading time of a continuous data region for a moving image. $B_{A-th}$ represents a threshold value for starting a seek operation for writing audio data. In the case where the code amount in the audio buffer memory becomes $B_{A-th}$ or more, the pickup 130 starts moving from the moving image data to the back-audio data. In Embodiment 1, it is assumed that $B_{A-th}$ is 96 kbytes.

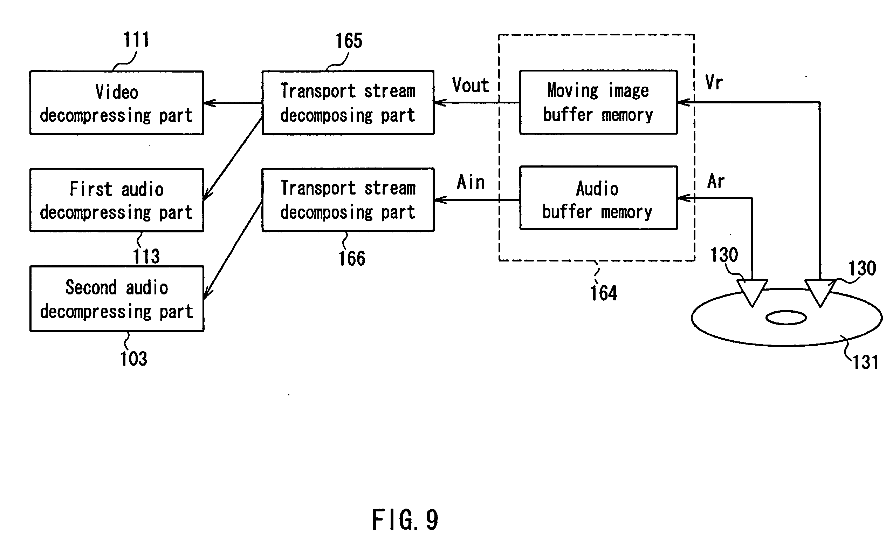

FIG. 9 shows an operation model during post-recording reproduction in Embodiment 1 of the present invention. Moving image data recorded on the optical disc 131 is taken in the moving image buffer memory at a speed Vr via the pickup 130, and further is transferred to the transport stream decomposing part 165 at a speed Vout. Furthermore, a video and an audio are reproduced by the video decompressing part 111 and the first audio decompressing part 113. On the other hand, back-audio data recorded on the optical disc 131 is taken in the audio buffer memory at a speed Ar via the pickup 130, and is reproduced as a back-audio by a second audio decompressing part 114 via the transport stream decomposing part 166 at a speed Vout. Herein, it is assumed that Vr > Vout, and Ar > Aout.

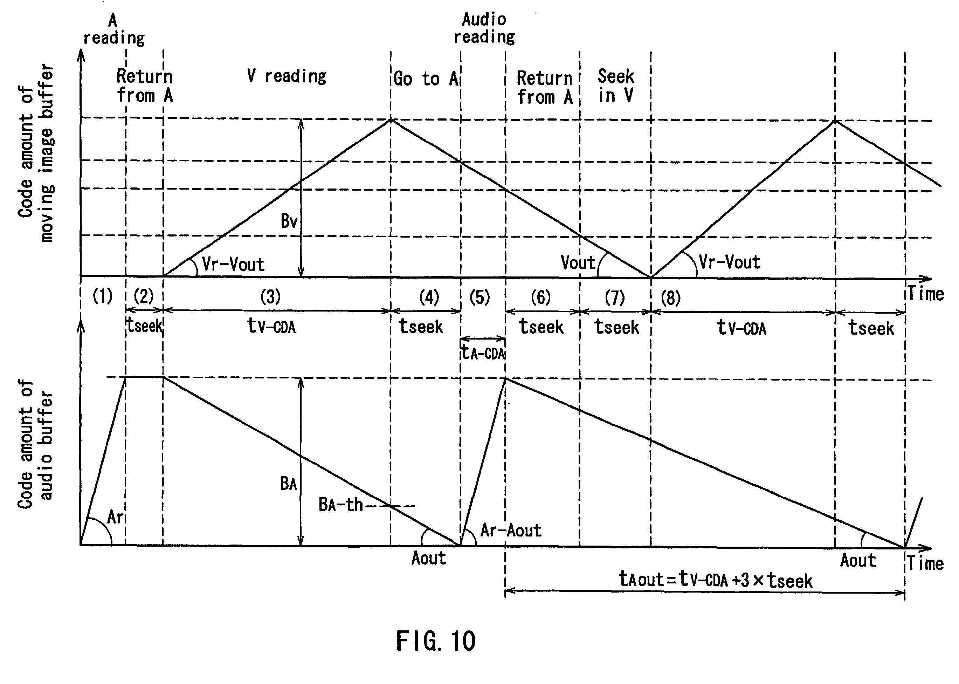

FIG. 10 shows a transition of a code amount in the moving image buffer memory and the audio buffer memory during post-recording reproduction in Embodiment 1 of the present invention. Bv represents a moving image buffer memory size, and $B_A$ represents an audio buffer memory size.

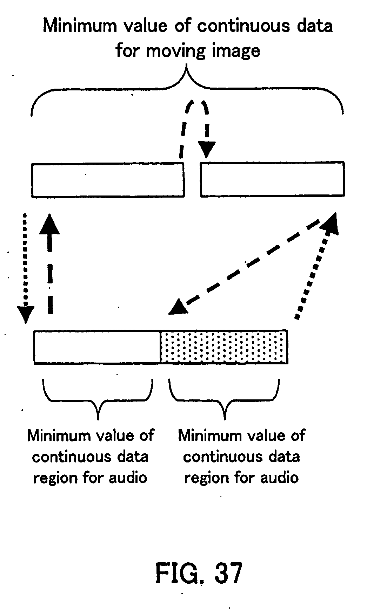

FIG. 37 is a diagram showing the concept of a continuous data region. A minimum continuous data region for a moving image contains video data corresponding to the total time including a time required for reading a continuous data region for an audio that is twice the minimum, and a maximum seek time of three movements of the pickup. On the other hand, the minimum continuous data region for an audio contains audio data corresponding to the total time including a time required for reading a minimum continuous data region for a video and a maximum seek time of three movements of the pickup.

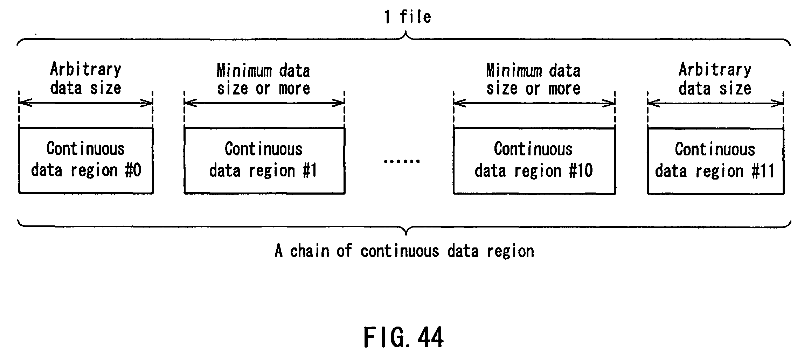

FIG. 44 shows a relationship between one file and continuous data regions. One file is composed of a plurality of continuous data regions. The leading continuous data region and the trailing continuous data region may have arbitrary data sizes. It is assumed that the data sizes of the continuous data regions other than the leading and trailing continuous data regions are equal to or more than a minimum data size. This configuration will be referred to as a chain of continuous data region. In FIG. 44, one file is composed of one chain of continuous data region; however one file may be composed of a plurality of chains of continuous data region. In the case where a plurality of chains of continuous data region are present, seamless continuous reproduction is not assured at a boundary between adjacent two continuous data chains. For example, in the case where a front portion of a recorded moving image file is deleted, the size of the leading continuous data region becomes equal to or lower than the minimum data size. Furthermore, for example, in the case where a recording suspension operation is performed at some midpoint in the continuous data region during recording of a moving image file, and in the case where a back portion of the recorded moving image file is deleted, the trailing continuous data size becomes equal to or lower than the minimum data size.

During post-recording mode recording, the functional blocks in FIG. 2 are used. The recording control part 161 controls the recording part 120, the continuous data region detecting part 160, and the logical block managing part 144, whereby post-recording mode recording is performed. At this time, the recording control part 161 allows the continuous data region detecting part 160 to detect a physically continuous available region.

Specifically, due to a recording start operation, the transport stream assembling part 104 divides the compressed video signal and the compressed audio signal respectively into transport packets V_TSP and A_TSP on the basis of 188 bytes. Furthermore, the transport stream assembling part 104 adds D_TSP generated by a dummy packet for post-recording generating part 105 to the above transport packets, and arranges these three kinds of transport packets so that one VOBU is configured, thereby creating a transport stream. Thereafter, the transport stream assembling part 104 gives the transport stream to the recording part 120 via the buffer memory 164.

In the recording part 120, recording of a VOBU is started from the position of a logical block number specified by the recording control part 161. In this case, in the recording part 120, one VOBU is divided on a basis of 32 kbytes, and an error correction code is added on a basis of 32 kbytes, whereby the VOBU is recorded on one logical block of the optical disc. Furthermore, in the case where recording of one VOBU is completed at some midpoint in one logical block, recording of a subsequent VOBU is performed continuously without forming a gap.

The continuous data region detecting part 160 searches for the use situation of a logical block managed in the logical block managing part 144, and detects a region where an unused logical block is continuous for 2.6 seconds in terms of a maximum recording and reproducing rate. Then, the recording part 120 is notified of a logical block number of the logical block region every time writing on a logical block basis occurs, and the logical block managing part 144 is notified that a logical block has been used.

The logical block managing part 144 starts the reproducing part 121 if required, and reads a space bit map of the UDF file system recorded on the optical disc 131, thereby grasping the use situation of the logical block. In the present embodiment, by reading a space bit map collectively at power-on, reading of a space bit map is handled as unnecessary processing during post-recording mode recording, post-recording recording, and post-recording reproduction.

Next, in the case of performing post-recording recording (recording of a back-audio), the functional blocks shown in FIG. 3 among the functional blocks shown in FIG. 1 are used. The recording control part 162 for post-recording controls so that an MPEG transport stream recorded on the optical disc 131 passes through the pickup 130, the reproducing part 121, and the transport stream decomposing part 165, whereby a video and an audio are reproduced. At this time, the buffer memory 164 is used separately by the moving image buffer memory and the audio buffer memory as shown in FIG. 7, and the buffer memory 164 is used for the purpose of temporarily accumulating data on previously recorded moving images and audios. The recording control part 162 for post-recording simultaneously compresses an audio in the audio signal input part 102 to an AAC compression code by allowing the audio to pass through the audio compressing part 103, and converts the AAC compression code to an MPEG transport stream by allowing the AAC compression code to pass through the transport stream assembling part 104.

The converted MPEG transport stream further is recorded on the phase change optical disc 131 as a back-audio file via the buffer memory 164 (an audio buffer memory in this case), the recording part 120, and the pickup 130.

The back-audio file is placed in a physically continuous region with a fixed length (the back-audio file differs from the moving image file in that the back-audio file has a fixed length and a different data size) as shown in FIG. 6.

A plurality of the regions with a fixed length are kept, and transport streams of a back-audio are placed continuously in these regions. The respective regions with a fixed length may be separate from or adjacent to each other physically. In the case where the regions with a fixed length are adjacent to each other physically, these regions may be referred to as one continuous data region collectively. The data size of the continuous data region in this case is an integral multiple of the fixed length.

The recording control part 162 for post recording reproduces a'video via the pickup 130 in Time (1) shown in FIG. 8. Therefore, in the moving image buffer memory, video data is accumulated at a speed equal to or higher than a minimum of Vr-Vout. On the other hand, in the audio buffer memory, transport streams of a back-audio are accumulated at a speed Ain or less. When the accumulation amount of the audio buffer memory exceeds 96 kbytes, which is the data size of the continuous data region for an audio, the recording control part 162 for post-recording moves the pickup 130 to an available continuous data region for back-audio data so as to write back-audio data (Time (2)). During this movement, reading of a moving image from the disc stops, so that the data amount of the moving image buffer memory decreases at a maximum of a speed Vout. When the movement of the pickup 130 is completed, the code amount of the audio buffer memory decreases at a speed Aw due to the writing of back-audio data, as shown in Time (3). Then, when the writing corresponding to one continuous data region for back-audio data is completed, the recording control part 162 for post-recording returns the pickup 130 to a position where reading of a moving image file stops (Time (4)). Furthermore, in the worst case, when the pickup 130 encounters a discontinuous portion in the continuous data region for a moving image file immediately after the pickup 130 returns, the pickup 130 is moved to a subsequent continuous data region. Therefore, the moving image data on the moving image buffer memory decreases to 0 (Time (5)). Then, when reading of moving image data in the subsequent continuous data region is restarted, the moving image data is accumulated in the moving image buffer memory at a minimum of a speed Vr-Vout (Time (6)). Thereinafter, similarly, the pickup 130 moves alternately, whereby post-recording recording is realized.

As described above, during the total time including a time of three pickup movements and a writing time of audio data, the minimum size of the continuous data region for a moving image file is set in such a manner that moving image data that continues displaying a moving image is accumulated exactly in a moving image buffer memory. Therefore, a moving image can be reproduced in real time continuously without interruption. Furthermore, simultaneously, an audio file also can be recorded continuously without allowing data to be lost.

In the case of post-recording reproduction, the functional blocks shown in FIG. 4 are used. The reproduction control part 163 for post-recording reproduces a moving image file recorded on the optical disc 131 as a video and a front-audio by allowing the moving image file to pass through the pickup 130, the reproducing part 121, the first transport stream decomposing part 165, the video decompressing part 111, and the first audio decompressing part 113. Simultaneously, the reproduction control part 163 for post-recording reproduces a back-audio file recorded on the optical disc 131 as a back-audio by allowing the back-audio file to pass through the pickup 130, the reproducing part 121, the second transport stream decomposing part 166, and the second audio decompressing part 114. At this time, the buffer memory 164 is used separately by the moving image buffer memory and the audio buffer memory, as shown in FIG. 9. The moving buffer memory is used for accumulating data on a moving image file, and the audio buffer memory is used for accumulating data on a back-audio file.

The reproduction control part 163 for post-recording reads a back-audio file corresponding to one continuous data region for an audio (96 kbytes) in Time (1) shown in FIG. 10. Consequently, back-audio data is accumulated in the audio buffer memory. Then, the pickup 130 starts moving from a back-audio file to a moving image file (Time (2)). When the pickup 130 reaches the moving image file, the pickup 130 starts reading and reproducing moving image data from the beginning of Time (3). Thus, in the moving image buffer memory, data is accumulated at a minimum of a speed Vr-Vout. Simultaneously, the pickup 130 starts reproducing data in the audio buffer memory from the beginning of Time (3). Consequently, the data amount in the audio buffer memory decreases at a maximum of a speed Aout. Then, when this data amount reaches $B_{A\text{-th}}$, the pickup 130 on the moving image file starts moving to the audio file (Time (4)). Because of this movement, reading of the moving image data from the optical disc 131 stops, so that the code amount of the moving image buffer memory decreases at a maximum of a speed Vout. When this movement is completed, in the same way as in Time (5), reading of data from the back-audio file starts, so that audio data is accumulated in the audio buffer memory at a minimum of a speed Ar-Aout. Then, in Time (6), the reproduction control part 163 for post recording moves the pickup 130 from the back-audio file to the moving image file. FIG. 10 shows an example in which, after the movement is completed, the pickup 130 happens to encounter a discontinuous point (boundary between continuous data regions) of the moving image file in Time (7), whereby the movement of the pickup 130 occurs. When this movement is completed, as shown in Time (8), the pickup 130 starts reading moving image data again. Thereinafter, similarly, the pickup 130 moves alternately, whereby post-recording reproduction is realized.

Assuming that the minimum reading time length in the continuous data region for a moving image during post-recording reproduction is $t_{V\text{-CDA}}$, and the reading time length in the continuous data region for an audio during post-recording reproduction is $t_{A\text{-CDA}}$, in FIG. 10, the following relationships hold:

$$(Vr - Vout)t_{V\text{-}CDA} = Vout \times (3t_{seek} + t_{A\text{-}CDA}) \tag{1}$$

$$(Ar - Aout)t_{A\text{-}CDA} = Aout \times t_{Aout} \tag{2}$$

$$t_{Aout} = t_{V\text{-}CDA} + 3t_{seek} \tag{3}$$

whereby $t_{V\text{-}CDA}$ and $t_{A\text{-}CDA}$ are obtained as follows:

$$t_{V\text{-}CDA} = (Vout/Vr) \times (3t_{seek} + t_{A\text{-}CDA})/(1 - (Vout/Vr)) \tag{4}$$

$$t_{A\text{-}CDA} = ((Aout/Ar) \times 3t_{seek})/(1 - (Aout/Ar) - (Vout/Vr)) \tag{5}$$

Furthermore, a minimum data size $S_{V\text{-}CDA}$ in the continuous data region for a video and a minimum data size $S_{A\text{-}CDA}$ in the continuous data region for a back-audio are obtained respectively as follows:

$$S_{V\text{-}CDA} = Vr \times t_{V\text{-}CDA} \tag{6}$$

$$S_{A\text{-}CDA} = Ar \times t_{A\text{-}CDA} \tag{7}$$

In the case of the present embodiment, by performing calculation assuming that $t_{seek}$ = 0.5 s, Vout = 10 Mbps, Vr = 24 Mbps, Aout = 288 kbps, and Ar = 24 Mbps, $t_{V\text{-}CDA}$ = 1.1 s, $S_{V\text{-}CDA}$ = 3.3 Mbytes, $t_{A\text{-}CDA}$ = 0.03 s, and $S_{A\text{-}CDA}$ = 90 kbytes. $S_{A\text{-}CDA}$ is set to be 96 kbytes so as to be an integral multiple of a logical block.

As described above, during the total time (1.53 s) including three times the movement time of the pickup 130 and the reading time of audio data, the continuous data region for a moving image file has a size (3.3 Mbytes) in such a manner that moving image data that continues displaying a moving image is accumulated exactly in a moving image buffer memory. Therefore, a video and a front-audio can be reproduced in real time continuously without interruption. Furthermore, simultaneously, a back-audio file also can be reproduced in real time continuously without allowing data from being lost.

There also is a merit that a plurality of back-audio files are created with respect to one video, and a combination of a video file and a back-audio file is sorted out, whereby a video can be compared with a plurality of back-audios.

The data size of the continuous data region for a back-audio file is a fixed length. However, the data size may be a variable length equal to or more than the size of the fixed value. In this case, it is necessary to extend the minimum data size of the continuous data region for a moving image file by the length in expectation of the maximum movement time of one movement of the pickup 130. More specifically, the data size of the continuous data region for a moving image file may be set to be the length in expectation of the movement time of four movements of the pickup 130 and the reading time of audio data. In this case, the data amount of a back-audio file that is read at a time by the pickup is assumed to be a fixed value.

In this case, the following relationships Expression (25) to Expression (27) hold:

$$(Vr\text{-}Vout)t_{V\text{-}CDA} = Vout \times (4t_{seek} + t_{A\text{-}CDA}) \tag{25}$$

$$(Ar - Aout)t_{A\text{-}CDA} = Aout \times t_{Aout} \tag{26}$$

$$t_{Aout} = t_{V\text{-}CDA} + 4t_{seek} \tag{27}$$

From Expressions (25) to (27), the minimum data size of the continuous data region for a moving image and the minimum data size of the continuous data region for an audio can be obtained similarly.

In the present embodiment, the data size of the continuous data region for a moving image file is set to be a predetermined size or more. The data size of the leading and trailing continuous data regions for a moving image file is not limited thereto for the following reason. For example, in the case where a leading portion of a moving image file is deleted, the data size of the remaining continuous data region may be smaller than a predetermined data size. Even in the case where the data size of a predetermined continuous data region is small, by increasing data reading before the commencement of reproduction, continuous reproduction of one moving image file is not influenced. This is shown in FIG. 44.

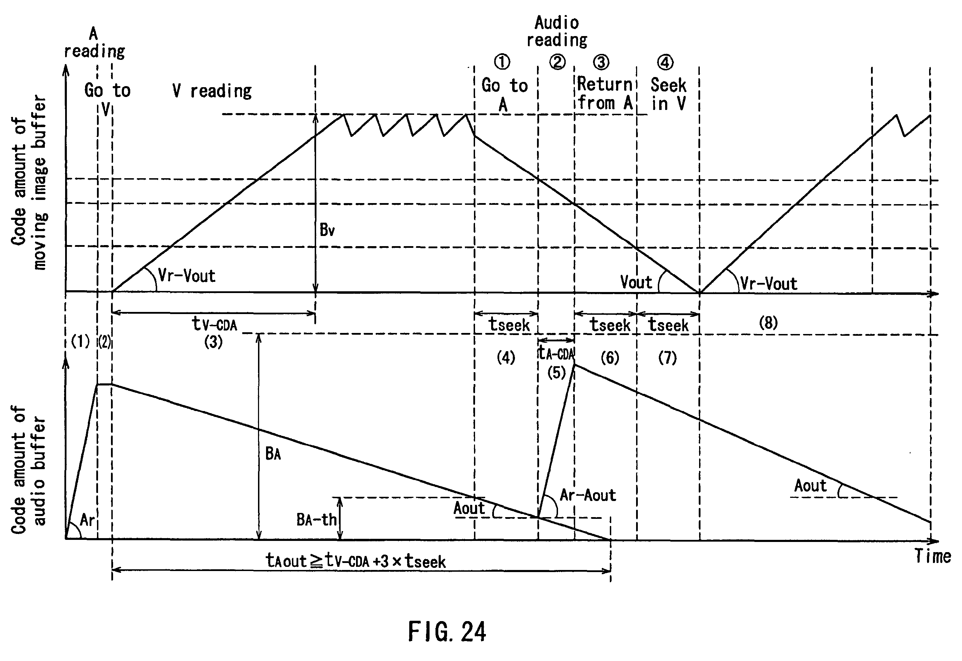

FIG. 10 shows the case where reading of a moving image file is synchronized with reading of a back-audio file completely. However, they are not necessarily synchronized with each other completely. As long as the continuous data regions for a moving image file and a back-audio file are kept to be longer than those in the case shown in FIG. 10, an operation as shown in FIG. 24 is performed. The difference with respect to FIG. 10 lies in the following: since the continuous data regions for a moving image file and a back-audio file are longer than those in the case shown in FIG. 10, an interval (3) is longer than that shown in FIG. 10. In this case, the above-mentioned Expression (3) can be replaced with the following Expression (8).

$$t_{Aout} \geq t_{V\text{-}CDA} + 3t_{seek} \tag{8}$$

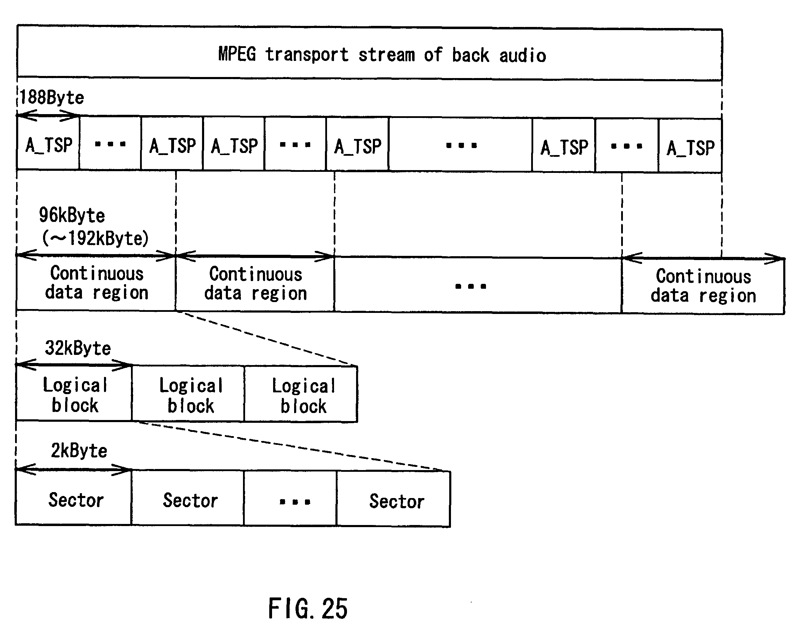

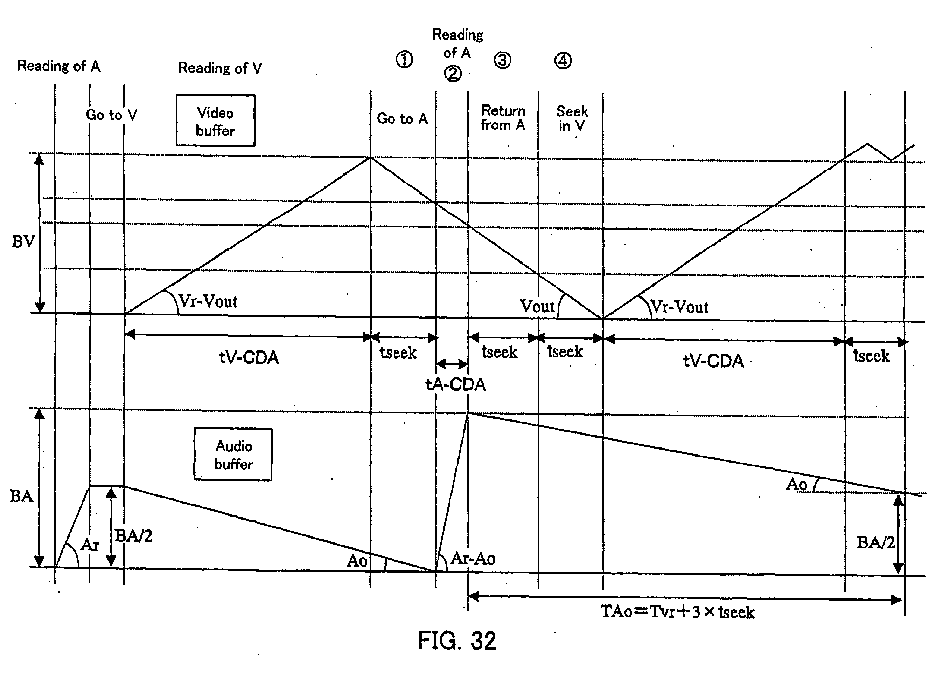

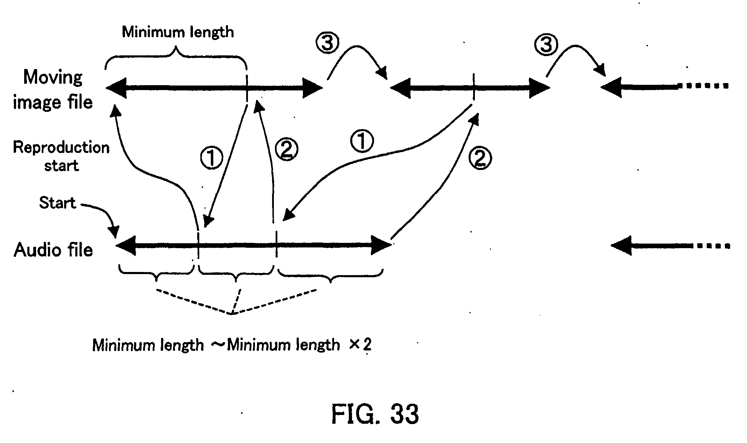

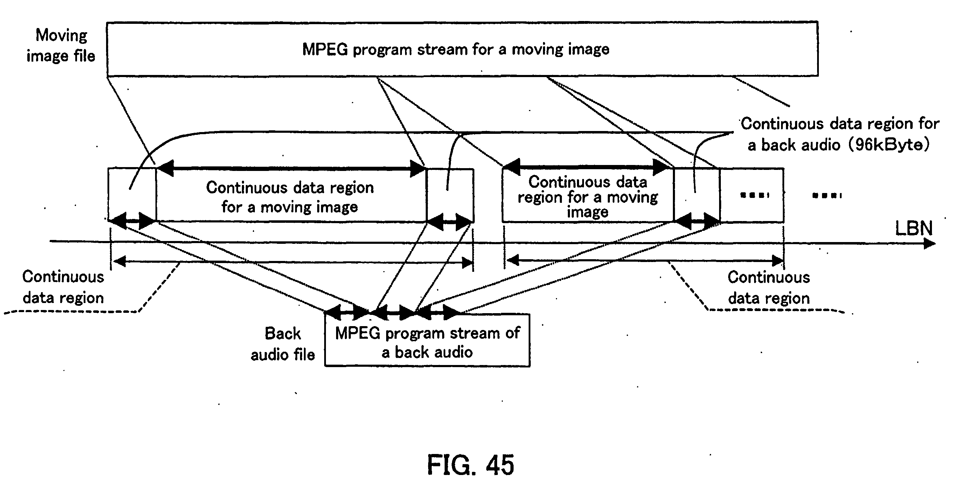

Furthermore, in this case, for example, by setting the data size of the continuous data region for a back-audio file to be in a range of 96 kbytes to 192 kbytes, the editing of a back-audio file becomes very easy (FIG. 25 shows the data configuration of a back-audio file. FIG. 45 shows a specific example of editing). This means the following. In editing in which particular portions (portions A and B shown in FIG. 45) of two back-audio files are combined to form one back-audio file, for example, in the case where the total data size of two continuous data regions (continuous data regions #J and #M shown in FIG. 45) in the combined portion is 96 kbytes or less, by simply combining two continuous data regions or by combining three continuous regions including another adjacent continuous region (continuous data regions #I, #J, and #M shown in FIG. 45), a continuous data region in a range of 96 kbytes to 192 kbytes can be created. Because of this, by rewriting data only in the combined portion, back-audio files can be combined with each other very easily. In the case of a fixed length of 96 kbytes, all the data after the combined portion need to be shifted forward in the continuous data region. In this case, it is assumed that the data amount read at a time by the pickup during post-recording recording and post-recording reproduction corresponds to one continuous data region. Furthermore, it is necessary that $t_{A\text{-}CDA}$ in Expression (1) is replaced with the reading time of audio data of 192 kbytes (i.e., an upper limit value). FIG. 33 shows the data reading order and the reading data amount during post-recording reproduction. The amount of one reading of moving image data may be equal to or more than a minimum continuous recording length for a moving image. On the other hand, the amount of one reading of audio data may be equal to or more than a minimum continuous recording length for an audio and less than twice the minimum continuous recording length. FIG. 32 shows a timing chart during post-recording reproduction in this case. $t_{A\text{-}CDA}$ in FIG. 32 differs from $t_{A\text{-}CDA}$ in FIG. 10 in that audio data which is twice that in FIG. 10 is read in FIG. 32.

Assuming that a data reading unit of a back-audio file is 1 to 2 times the data size of the minimum continuous data region, for example, as in a range of 96 kbytes to 192 k bytes, by replacing Expression (2) with the following Expression (9), the data size of the minimum continuous data region is determined.

$$(Ar - Aout)t_{A\text{-}CDA} = 2Aout \times t_{Aout} \tag{9}$$

Furthermore, from the relationships of Expressions (1), (9), and (3), the following expression is derived.

$$t_{A\text{-}CDA} = (2 \times Aout \times Vr) \times 3t_{seek})/((Vr - Vout) \times (Ar - Aout) - 2 \times Aout \times$$

$$Vout) \tag{10}$$

Herein, Vr = Ar, so that the above-mentioned Expression (10) can be simplified as follows.

$$t_{A\text{-}CDA} = 3 \times Aout/(Vr - Vout - Aout - Aout \times Vout/Vr) \tag{11}$$

Furthermore, in this case, the data size of the continuous data region for a back-audio file is varied in a predetermined range. Therefore, an audio file may be configured using only a Long Allocation Descriptor of UDF so that the reproduction control part for post-recording can detect a boundary between continuous data regions for a back-audio easily, and 1 bit of information representing the leading end of the continuous data region for a back-audio may be added to an Implementation Use Field. In this case, the reason why a Short Allocation Descriptor is not used is that information representing a boundary cannot be placed due to the absence of the Implementation Use Field. Furthermore, as another method, in an Extended Attributes field of a file entry, information representing whether or not an Allocation Descriptor is the leading end of the continuous data region may be provided on an Allocation Descriptor basis. Herein, the case where an Allocation Descriptor is not the leading end of the continuous data region corresponds to the case where, as the result of a defective logical block being skipped, two Allocation Descriptors are used.

Furthermore, as another method, during post-recording recording, the data size of the continuous data region for a back-audio may be recorded in a file different from a back-audio file. In this case, the data size of each continuous data region for a back-audio is recorded in a file different from a back-audio file on a back-audio file basis. During post-recording reproduction, the data size information on the continuous data region for a back-audio separately recorded is referred to, and data corresponding to the data size is read at a time. Needless to say, the data size of each continuous data region for a back-audio may be recorded as a part of a back-audio file.

In Embodiment 1, although the boundary between continuous data regions for a back-audio and the boundary between respective audio frames contained in A_TSP are not mentioned specifically, they may be matched.

In Embodiment 1, one seek operation between continuous data regions on a moving image file side has been considered. Contrary to this, one seek operation between continuous data regions on a back-audio side may be considered, in which the continuous data region on a back-audio file side has a data size with a predetermined value or more, and the continuous data region on a moving image file side has a data size in a predetermined range.

In Embodiment 1, the data size of the continuous data region is calculated based on peak rates Vr and Ar. For example, in the case where the actual bit rate of a moving image stream is varied at a peak rate or less, although the data size of the continuous data region does not satisfy the Expression (6), it only needs to contain moving image data of a reproduction time equal to that at a peak rate. This also applies to the case of an audio stream. For example, even in the case where recording is started assuming that Vout = 10 Mbps and $S_{V\text{-}CDA}$ = 3.3 Mbyte, if the actual bit rate generated by the transport stream assembling part 104 happens to be 5 Mbps or less, the data size of the continuous data region for a video may be 1.65 Mbytes, because this is comparable to the case where the data corresponding to the same reproduction time is read. Furthermore, the data size may be the same interval of transmission timing (i.e., timing at which a transport packet reaches T-STD in the case of MPEG2) instead of the same reproduction time.

In Embodiment 1, the case of post-recording recording and post-recording reproduction has been described. However, in the case where recording of a moving image file at a low bit rate (e.g., 1 Mbps or less) is performed simultaneously with recording of a moving image file, the idea of a continuous data region length similar to post-recording recording may be introduced. For this case, for example, it is assumed that while a moving image file of 740 × 480 pixels compressed under MPEG2 is being recorded by a camcorder, a moving image file of 160 × 120 pixels compressed under MPEG4 is recorded. In this case, a moving image file of 740 × 480 pixels is not to be reproduced but to be recorded.

In Embodiment 1, one moving image file and one back-audio file are recorded/reproduced simultaneously, or reproduced simultaneously. The similar idea also is applicable to the case where a plurality of back-audio files are recorded while one moving image file is being reproduced, and the case where a plurality of back-audio files are reproduced while one moving image file is being reproduced. For example, in the case of assuming *N* back-audio files, the minimum value of the data size of the continuous recording region for a moving image file may be set to be *N* times that in the case of one back-audio file. The maximum value and the minimum value of the continuous data region for a back-audio file also may be set to be *N* times.

In Embodiment 1, during post-recording reproduction, when the data in the audio buffer becomes a threshold value $B_{A\text{-}th}$ or less in FIG. 10, the pickup is moved to a back-audio file side. However, one continuous data region for a back-audio file may be read at a previously determined time period and schedule. While a back-audio file is not read, reading of a moving image file is performed appropriately, if required.

In Embodiment 1, during post-recording reproduction, when the data in the audio buffer becomes a threshold value $B_{A\text{-}th}$ or less in FIG. 10, the pickup is moved to a back-audio file side. However, a moving image file and a back-audio file may be read at a previously determined time period and schedule.

In Embodiment 1, during post-recording recording, when the data in the audio buffer becomes a threshold value $B_{A\text{-}th}$ or more in FIG. 8, the pickup is moved to a back-audio file side. However, writing in one continuous data region for a back-audio file may be performed at a previously determined time period and schedule. While a back-audio file is not read, reading of a moving image file is performed appropriately, if required.

In Embodiment 1, during post-recording recording, when the data in the audio buffer becomes a threshold value $B_{A\text{-}th}$ or more in FIG. 8, the pickup is moved to a back-audio file side. However, writing in one continuous data region for a back-audio file and reading of data from a moving image file may be performed at a previously determined time period and schedule.

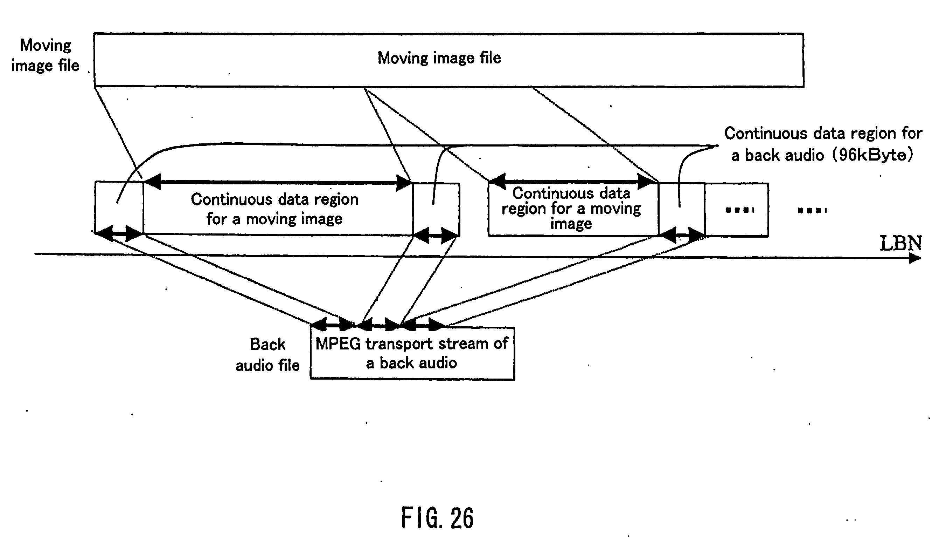

In Embodiment 1, the case where the data size of the continuous data region for a back-audio file is a variable length of a predetermined value or more has been shown. In Embodiment 1, the physical arrangement of a moving image file and a back-audio file has not been mentioned particularly. However, during post-recording mode recording, a video file may be recorded while previously keeping a data region for back-audio data so that data on a back-audio file and data on a moving image file can be arranged alternately during post-recording recording to be performed later, in accordance with the configuration as shown in FIG. 16. Then, during post-recording recording, the data on a back-audio file is written in the previously kept region. Because of this, the seek generation amount during post-recording reproduction can be reduced remarkably. This is because, if the continuous data region for a back-audio and the continuous data region for a moving image file shown in FIG. 26 are read in the order of the physical arrangement, the use of two seek operations every time moving image data and back-audio data are read alternately is not necessary. This enables post-recording reproduction by the processing similar to the seek operation required for reproducing a moving image file. During post-recording mode recording, in the case where a data region for audio data is kept previously, a vacant region may be configured as one independent file. Furthermore, the same data as the audio data in a moving image file may be recoded in this vacant region. Consequently, only a scene whose sound is desired to be rewritten is rewritten, and regarding the remaining portion, the same data as the audio data in a moving image file can be used easily. In FIG. 26, although a back-audio file is composed of an MPEG transport stream, it may be composed of an MPEG program stream. Furthermore, the back-audio file may be composed of an elementary stream such as AAC, AC3, SPCM, or the like. FIG. 45 shows the case where a file and a back-audio file are composed of an MPEG program stream. One continuous data region of the back-audio file is composed mainly of three ECC blocks (96 kBytes in total).

In this case, recording addresses and recording sizes regarding a continuous data region for a moving image and a continuous data region for a back-audio may be recorded on an optical disc separately.

Furthermore, in this case, in the continuous data region for a moving image and the continuous data region for a back-audio, a video frame and an audio frame are recorded at substantially the same reproduction timing so as to be adjacent to each to other.

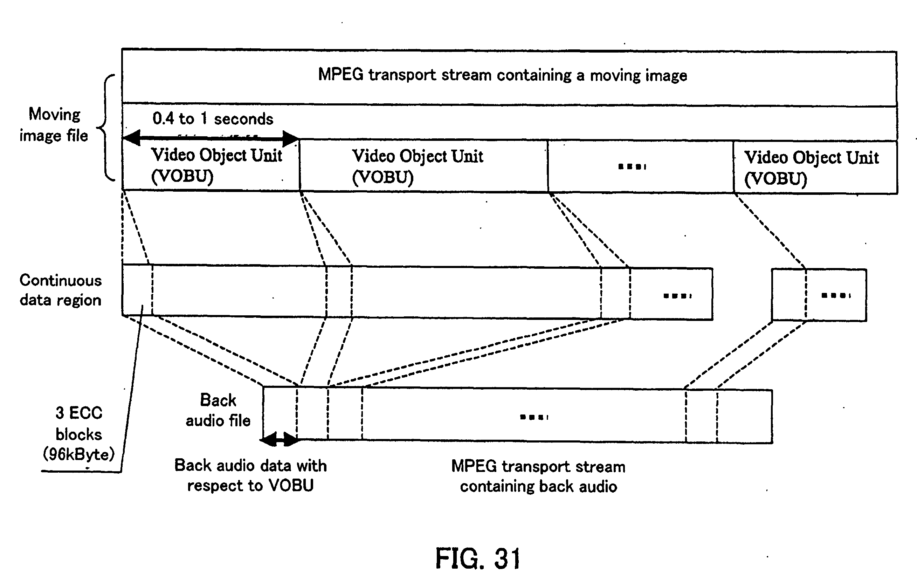

Furthermore, as shown in FIG. 31, the continuous data region for a back-audio file may be physically arranged so as to be placed immediately before a VOBU of a moving image file. In this case, in one continuous data region for a back-audio, back-audio data corresponding to a VOBU to be placed physically immediately thereafter is stored. Because of this, random access on a VOBU basis can be performed easily during post-recording reproduction. In this case, during post-recording reproduction, the continuous reading amount of a moving image file required for reading data in a seamless manner is 1/3 compared with the case of Embodiment 1. In the case where the post-recording recording onto the continuous data region for a back-audio file cannot be performed in real time due to the relationship between the transfer rate and the maximum seek time of an optical disc drive, data for a back-audio may be recorded off-line. Although recording of an audio cannot be performed while reproduction data is being confirmed, this can be applied to the case where BGM (background music) is written and the like. In FIG. 31, the continuous data region for a back-audio file is composed of three ECC blocks. Specifically, the continuous data region is composed of two ECC blocks (64 kbytes) for audio data of one second, and a preliminary ECC block (32 kbytes) for generation of a defective block. In addition, the fourth ECC block may be added so as to record still image data and the like to be superimposed during reproduction of a moving image file.

Furthermore, the back-audio data shown in FIG. 31 may have an audio frame having the same presentation time stamp as that of dummy data for a back-audio in moving image data. Because of this, audio data for a back-audio file can be copied easily in a moving image file. Furthermore, the internal data configuration in a packet may have a data configuration similar to back-audio data in a moving image file. This also applies to the case where a moving image file is recorded in a program stream form, not in a transport stream.

In the case where, during chain of continuous data region post-recording reproduction in a moving image file, data to be reproduced in a video buffer or an audio buffer may be subjected to underflow, the underflow of an audio buffer may be controlled to be eliminated preferentially.

In FIGS. 26 and 31, only a back-audio file and a moving image file are interleaved. A third file may be interleaved in the same way as in a back-audio file.

In FIG. 26, the example in which a back-audio file is recorded previously after recording of a moving image file, and a back-audio is subjected to post-recording recording has been described. A back-audio file may be recorded previously so that a continuous data region for a back-audio becomes dummy data that is a part of a moving image file. When audio data is recorded during post-recording, a file containing back-audio data may be generated.

In the present embodiment, two files (a moving image file and an audio file) are accessed alternately. Therefore, continuous reproduction cannot be assured unless only a finite number of ECC blocks containing data other than moving image data are permitted in one minimum continuous data region. Herein, as the finite number, for example, two or less ECC blocks are permitted for each minimum length of the continuous data region.

Furthermore, there also is the following method. Since the minimum length of the continuous data region depends upon a moving image bit rate Vo, assuming that the ratio of ECC blocks containing data other than a moving image in the continuous data region, K = 5%. In this case, the size SCDA of the continuous data region containing data other than a moving image is represented as follows.

$$SCDA = Vo \times Tj/((1-k) - Vo/Vr) \tag{29}$$

In the present embodiment, post-recording mode recording is selected, in which a minimum data size of the continuous data region that enables a moving image file to be subjected to post-recording recording is selected. On the other hand, regarding a moving image file recorded in a normal mode, in the case where the moving image file is not recorded in a minimum continuous data size in Expression (6), the moving image file cannot be subjected to post-recording recording. If a user attempts to perform post-recording recording with respect to such a file, it is preferable to display characters "post-recording X" to the user.

(Embodiment 2)

Next, Embodiment 2 of the present invention will be described. Embodiment 2 differs from Embodiment 1 in an encoding system of a back-audio. In Embodiment 1, an AAC compression code is used, whereas in Embodiment 2, a linear PCM (Linear PCM or Pulse Code Modulation) code is used.

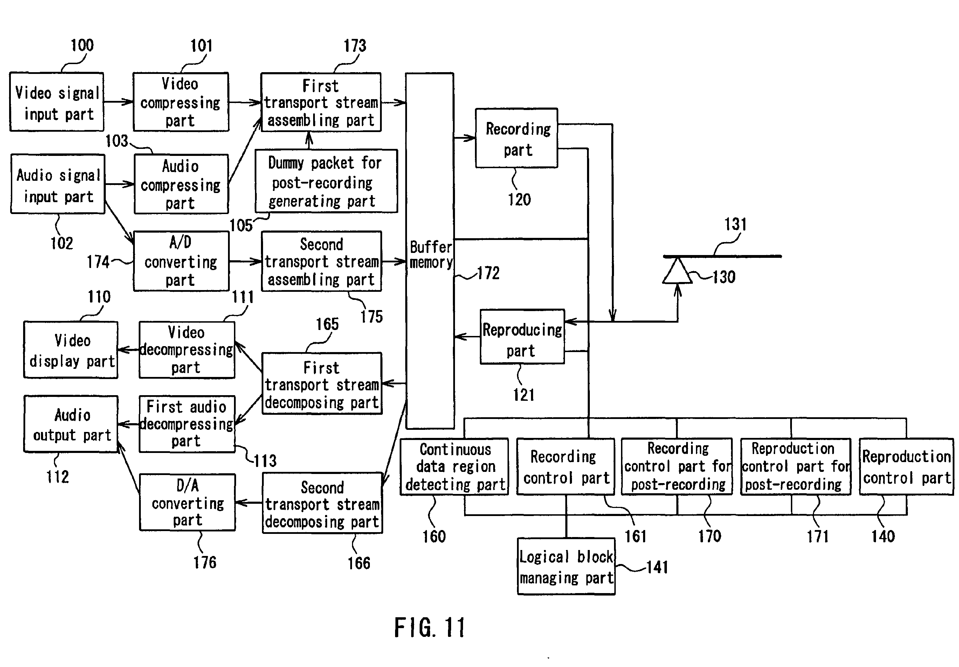

FIG. 11 is a block diagram showing a functional configuration of an audio/video information recording and reproducing apparatus according to Embodiment 2 of the present invention. FIG. 11 differs from FIG. 1 in that an A/D converter 174 and a second transport stream assembling part 175 are included; a first transport stream assembling part 173 is provided in place of the transport stream assembling part 104 (these parts have the same function); a D/A converter 176 is provided in place of the second audio decompressing part 114; and a recording control part 170 for post-recording, a reproduction control part 171 for post-recording, and a buffer memory 172, which are functionally different from those shown in FIG. 1, are provided. The data reading speed of a reproducing part 121, the maximum recording and reproducing rate of the transport stream decomposing parts 165 and 166, and the maximum movement time during a reading operation and a writing operation of the pickup 130 are the same as those in the conventional example.

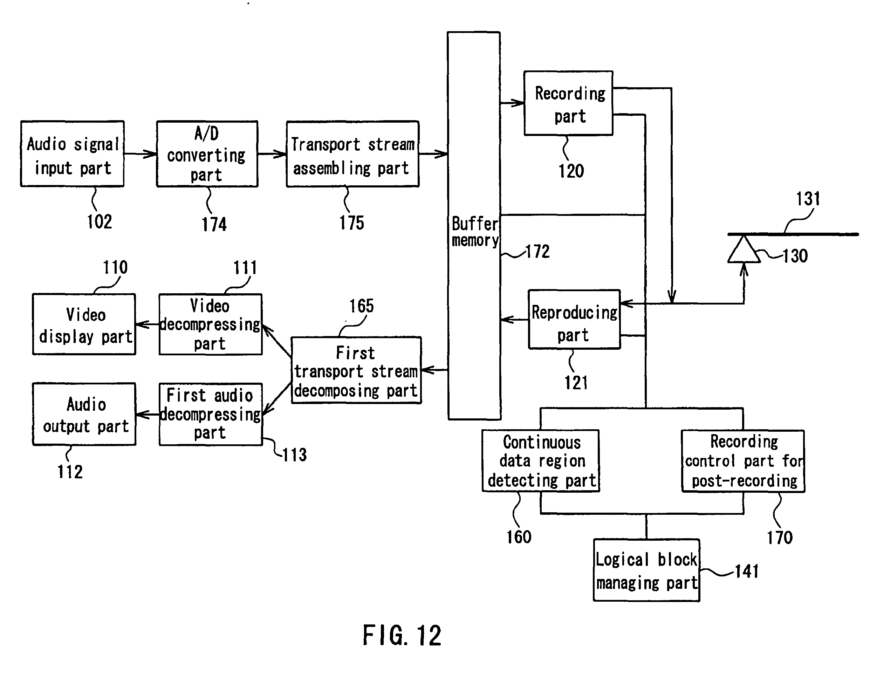

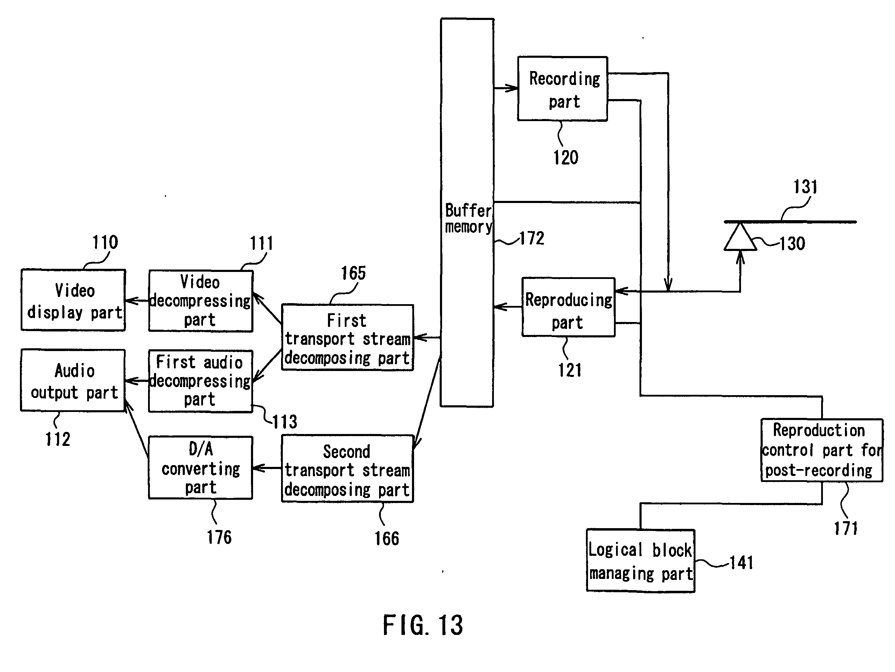

FIG. 12 shows blocks related to post-recording recording among those shown in FIG. 11. FIG. 13 shows blocks related to post-recording reproduction among those shown in FIG. 11.

As described above, since a linear PCM code is used as a code form of a back-audio, the D/A converter 176 having a small circuit scale can be substituted for the second audio decompressing part 114 having a large circuit scale during post-recording reproduction.

Since the reproduction speed of a back-audio is increased compared with the case of AAC compression, the length of the continuous data region needs to be adjusted accordingly in accordance with the Expression (7).

Although the data size of the continuous data region for a back-audio file is a fixed length, the data size may be a variable length of a fixed size or more. In this case, the minimum data size of the continuous data region for a moving image file needs to be extended by the length in expectation of the maximum movement time of one movement of the pickup 130.

The data size of the continuous data region for a back-audio file may be in a predetermined range (e.g., 96 kbytes to 192 kbytes). This is because editing such as combination and the like of back-audio files can be performed very easily.

(Embodiment 3)

Next, Embodiment 3 of the present invention will be described. Embodiment 3 differs from Embodiment 1 in that, instead of reproducing a moving image file and a back-audio file simultaneously during post-recording reproduction, a back-audio file is mixed (MIX) previously in a moving image file as one transport stream, and a front-audio stream and a back-audio stream are decoded in parallel during reproduction.

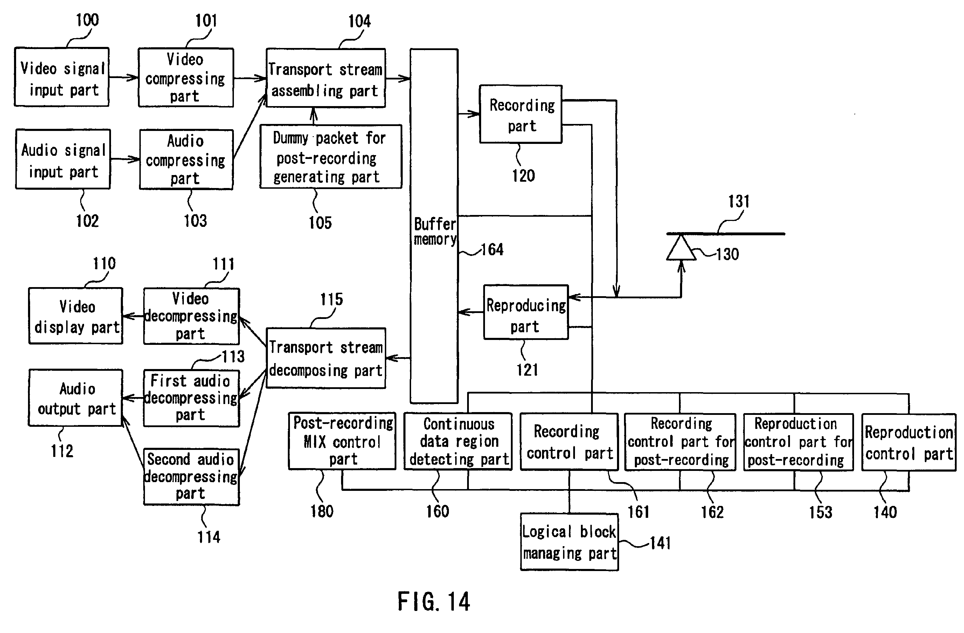

FIG. 14 is a block diagram showing a functional configuration of an audio/video information recording and reproducing apparatus according to Embodiment 3 of the present invention. FIG. 14 differs from FIG. 1 in that only one transport stream decomposing part 115 is provided, and an MIX control part 180 for post-recording is provided. Furthermore, FIG. 14 differs from FIG. 1 in that the reproduction control part 153 for post-recording has the function equal to that of the reproduction control part 153 for post-recording in the conventional example. The data reading speed of a reproducing part 121, the maximum recording and reproducing speed of the transport stream decomposing part 115, and the maximum movement time during a reading operation and a writing operation of the pickup 130 are the same as those in the conventional example.

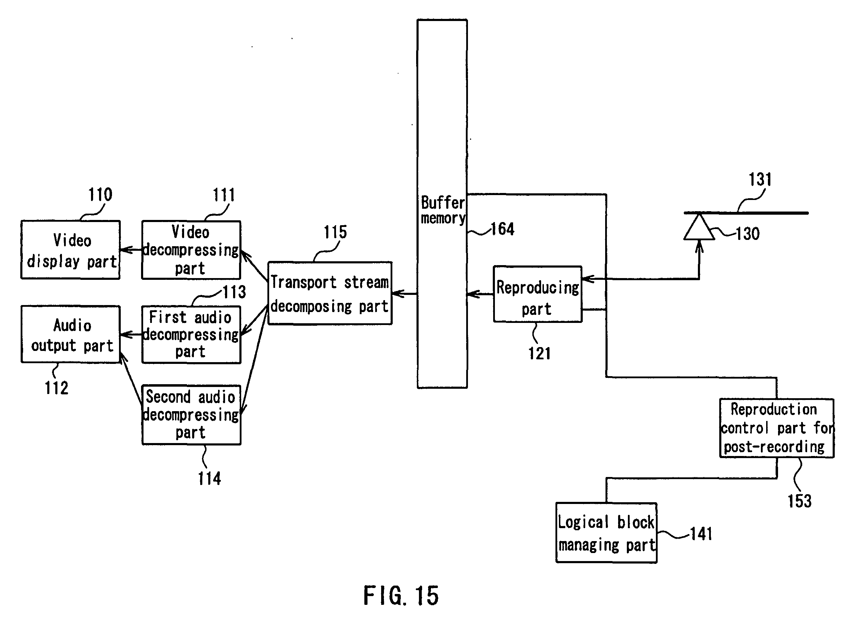

FIG. 15 shows blocks related to post-recording reproduction among those shown in FIG. 14.

The same processing as that in Embodiment 1 is performed during recording of a video and during post-recording recording. Thereafter, D_TSP in a moving image file is replaced with A_TSP in a back-audio file, whereby a transport stream in which a front-audio stream is mixed with a back-audio stream is obtained.

During post-recording reproduction, the moving image file after being mixed is allowed to pass through a reproducing part 121, a buffer memory 164, and a transport stream decomposing part 115 shown in FIG. 15. Furthermore, the front-audio stream is allowed to pass through the first audio decompressing part 114 and the audio output part 112, and the back-audio stream is allowed to pass through the second audio decompressing part 114 and the audio output part 112, whereby an audio and a video of both the streams are reproduced together.

As described above, by creating a moving image file composed of a transport stream in which a front-audio is mixed with a back-audio, it is not necessary to manage two files, and only one file need be managed.

Furthermore, since the data configurations of a moving image file and a back-audio file are in the same transport stream form, D_TSP in the moving image file may be exchanged with A_TSP in a back-audio file. Therefore, a mixed moving image file is likely to be created. Furthermore, since the data configurations of a moving image file and a back-audio file are in the same transport stream form, when a transport stream in which D_TSP in a moving image file is replaced with A_TSP in a back-audio file is output to a digital interface, such replacement is performed easily. Furthermore, by setting the data configuration of a back-audio file to be in an MPEG system stream form such as a transport stream, even when an audio compression code (e.g., an AAC code) is varied, an audio file can be handled as a unified file, so that it becomes easy to handle a back-audio file.

The data size of the continuous data region for a back-audio file may be in a predetermined range (e.g., 96 kbytes to 192 kbytes). This is because editing such as combination and the like of back-audio files can be performed very easily.

Although only the data size of the continuous data region for a back-audio file is a fixed length, the data size of the continuous data region on a moving image file side may be another fixed value. In this case, the minimum data size of the continuous data region for a moving image file needs to be reduced by the length in expectation of the maximum movement time of one movement of the pickup 130. More specifically, the data size of the continuous data region for a moving image file may be set to be a length in expectation of the movement time of two movements of the pickup 130 and the reading time of audio data. In this case, the data amount of a moving image file to be read at a time by the pickup during post-recording reproduction is assumed to be one continuous data region. Furthermore, the data amount of a back-audio file to be read by the pickup during post-recording reproduction is assumed to be one continuous data region.

In this case, the data size of the continuous data region for a back-audio file may not be a fixed length, and may be a data size falling between a minimum value and a maximum value.

(Embodiment 4)

Next, Embodiment 4 of the present invention will be described. Embodiment 4 differs from Embodiment 1 in that audio data is not contained in a moving image file, and post-recording reproduction of a moving image file containing only a still image is handled. The case will be described, in which, while such still images are switched like a slide show at a predetermined time interval in a specified order, an audio recorded in an audio file is reproduced simultaneously. The configuration of an audio/video information recording and reproducing apparatus is assumed to be the same as that in Embodiment 1.

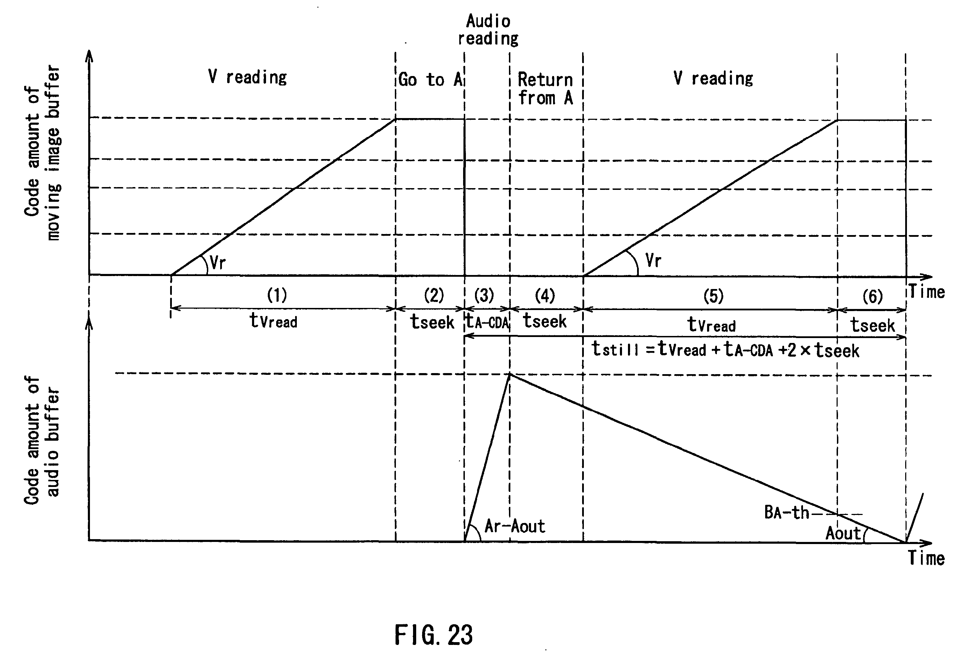

FIG. 23 shows a transition of a code amount in a moving image buffer memory and an audio buffer memory during post-recording reproduction in the audio/video information recording and reproducing apparatus according to Embodiment 4 of the present invention. Hereinafter, the present invention will be described with reference to FIG. 23.

The reproduction control part 163 for post-recording starts reading moving image data from the beginning of Time (1). Thus, data is accumulated at a speed Vr in the moving image buffer memory. Then, in Time (2), a seek operation with respect to audio data is performed. After reading of still image data corresponding to one sheet is completed, a still image thereof is displayed in Time (3). Simultaneously, reading of data in an audio buffer memory and reproduction of the read data are started. Because of this, the data amount in the audio buffer memory increases at a speed of a maximum of Ar-Aout. In Time (4), the pickup 130 moves from the audio data to the video data. During this time, an audio is output simultaneously, so that the code amount in the audio buffer memory decreases at a speed Aout. When the movement of the pickup 130 is completed, reading of video data is started again (Time (5)). When the data amount in the audio buffer memory reaches $B_{A-th}$, the pickup 130 on the moving image file starts moving again to the audio file (Time (6)). Due to the repetition of these steps, during a display period $t_{still}$, the read still image data is transferred to the transport stream decomposing part 165, and a video is reproduced by the video decomposing part 111. Furthermore, during the display period $t_{still}$, the read audio data is reproduced by the first audio decompressing part 113.

Herein, assuming that the reading time of still image data of one sheet is $t_{Vread}$, the reading time of audio data recorded in the continuous data region with a fixed data size is $t_{A-CDA}$, and the maximum movement time of the pickup 130 is $t_{seek}$, a video update interval $t_{still}l$ that is a display period only needs to satisfy the following Expression (12):

$$t_{still} \geq t_{Vread} + t_{A-CDA} + 2t_{seek} \qquad (12)$$

As described above, an audio can be added to a slide show easily.

In Embodiment 4, a still image is contained in a moving image file composed of a transport stream; however, the still image may be a JPEG file. In this case, needless to say, a JPEG decoding part is required.

In Embodiment 4, the update interval of still images is constant; however, the update interval may be specified individually on a sheet basis as long as it satisfies the above Expression (E12). In the case where the data sizes of still images are varied, the update interval may be specified in a range satisfying Expression (9) in accordance with the data size.

In Embodiment 4, an audio is reproduced while a still image is displayed in a slide show. This also applies to the case of recording of an audio. In this case, the reading time and the writing time of audio data may be replaced.

The data size of the continuous data region for a back-audio file may be in a predetermined range (e.g., 96 kbytes to 192 kbytes). This is because editing such as combination and the like of back-audio files can be performed very easily. In this case, it is necessary that $t_{A-CDA}$ in Expression (12) is replaced with the reading time of a maximum value (192 kbytes) of the data size.

Furthermore, in Embodiment 4, seek does not occur during one reading of an audio file; however, it may be assumed that seek may occur a plurality of times. In this case, it is necessary to extend the reproduction time of a still image by the seek amount.

(Embodiment 5)

The difference between Embodiments 1 and 5 of the present invention will be described below.

First, Embodiment 5 differs from Embodiment 1 in a minimum value of the continuous data region for a moving image. The minimum value is obtained by adding up the data size of the continuous data region required for keeping moving image data corresponding to the maximum movement time of two movements of the pickup, and the data size of the continuous data region required for keeping moving image data while the data size that is twice the minimum value of the continuous data region for a back-audio is read.

Second, Embodiment 5 differs from Embodiment 1 in a minimum value of the continuous data region for a back-audio. The minimum value is obtained by adding up the data size of the continuous data region required for keeping back-audio data corresponding to the maximum movement time of two movements of the pickup, and the data size of the continuous data region required for keeping moving image data to be reproduced while data that is twice the minimum value of the continuous data region for a video is read.

Third, Embodiment 5 differs from Embodiment 1 in that the minimum value and the maximum value of one reading amount of moving image data are determined.

Fourth, Embodiment 5 differs from Embodiment 1 in that the minimum value and the maximum value of one reading amount of data for a back-audio also are determined.

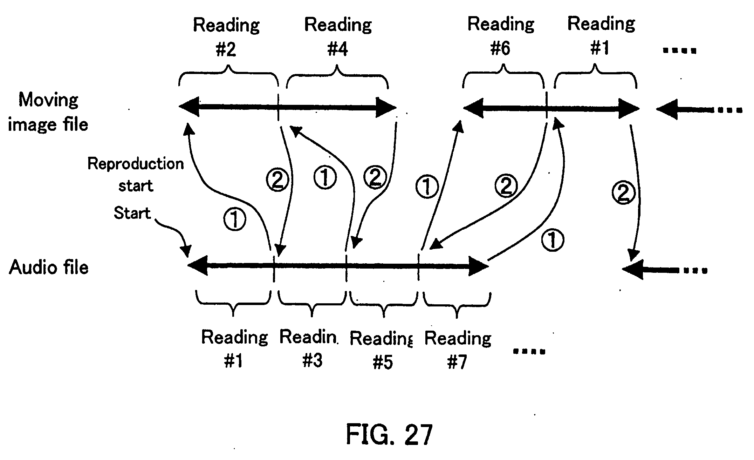

FIG. 27 shows a movement path of the pickup during post-recording reproduction in Embodiment 5. In FIG. 27, moving image data or a back-audio file are read in the order of a reading number (number following "#").

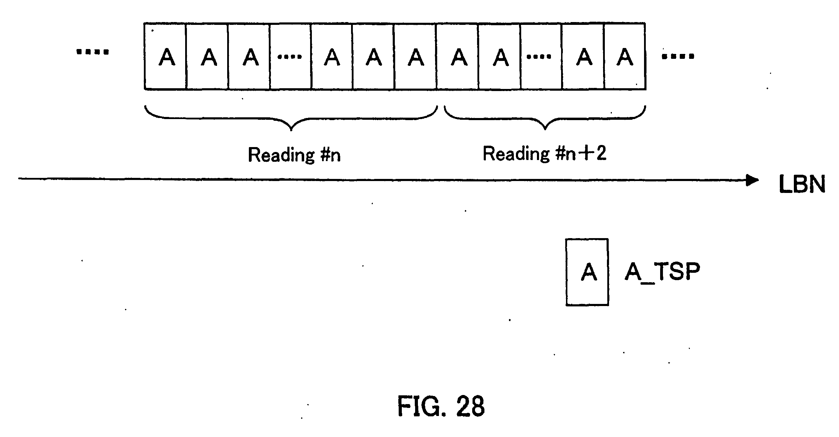

FIG. 28 is a diagram showing a data configuration of a back-audio file in Embodiment 5. In FIG. 28, the continuous data region is composed of A_TSP. Furthermore, it is assumed that a particular data range on the continuous data region is one reading range.

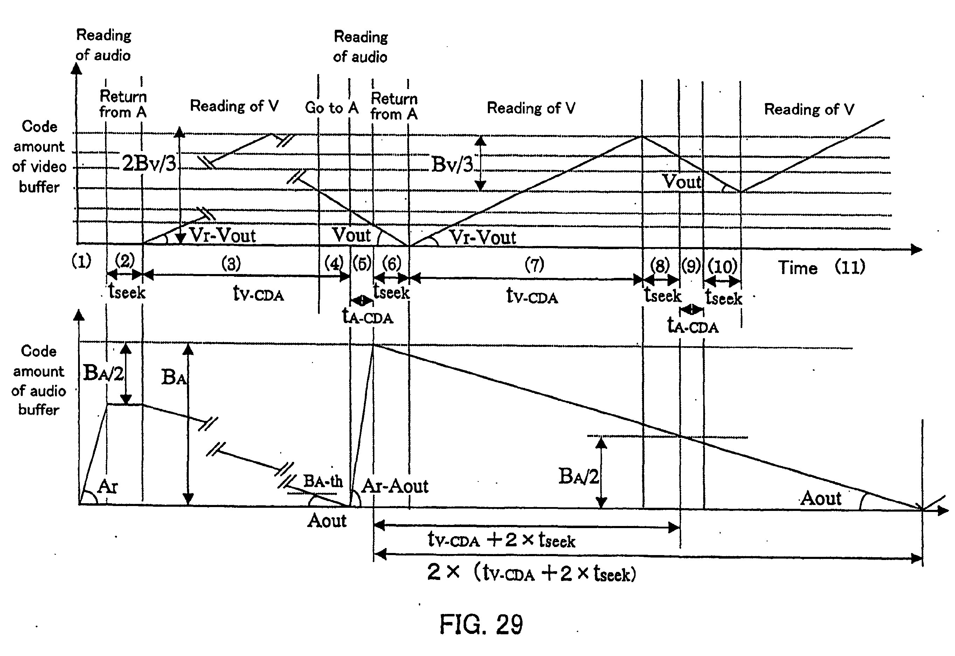

FIG. 29 shows a transition of a code amount in a moving image buffer memory and an audio buffer memory during post-recording reproduction in the audio/video information recording and reproducing apparatus in Embodiment 5.

In FIG. 29, first, the reproduction control part for post-recording reads audio data corresponding to the minimum value of the continuous data region for a back-audio of a back-audio file (FIG. 29 (1)). Then, the pickup is moved to moving image data (FIG. 29 (2)). Moving image data corresponding to the twice the minimum value is read from the continuous data region for a video (FIG. 29 (3)). Thereafter, when the data in the audio buffer starts being exhausted to reach a threshold value $B_{A-th}$ or less, the pickup is moved to an audio file (FIG. 29 (4)), the audio data is read during $t_{A-CDA}$ (FIG. 29 (5)), and the twice the minimum length of the continuous data region for a back-audio is read (FIG. 29 (6)). Then, the pickup is moved to read video data (FIG. 29 (7)), and the video data is accumulated up to 2 Bv/3. Thereafter, reading of the video data is stopped (FIG. 29 (8) to (10)). When the buffer remaining amount of video data is decreased to Bv/3, reading is started again (FIG. 29 (11)). When the data amount in the video buffer is prevented from reaching a value below Bv/3, and the data remaining amount in the audio buffer reaches $B_{A\text{-}th}$ or less, the movement of the pickup from the moving image data to the data for a back-audio is started so as to read audio data.

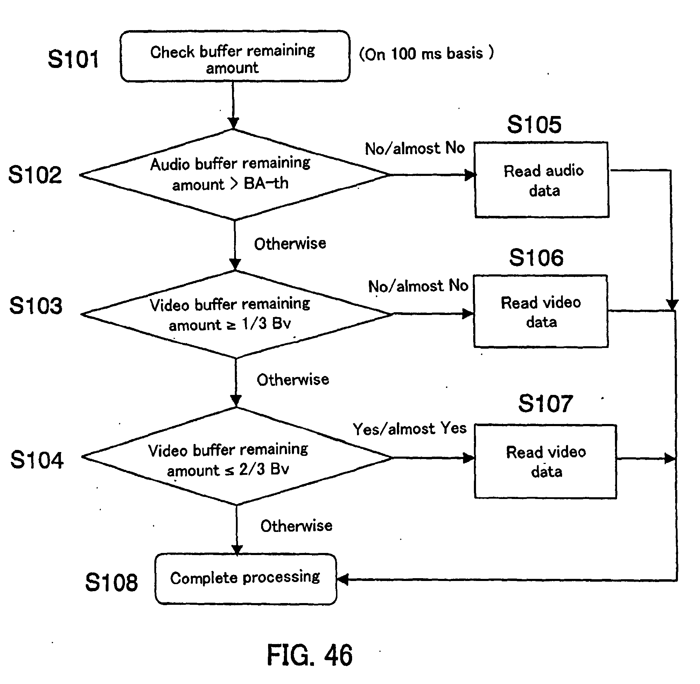

FIG. 46 shows a processing procedure of a video buffer and an audio buffer performed by the reproduction control part for post recording for 100 msec. during post-recording.

In FIG. 46, first, the buffer remaining amount is checked once every 100 ms (S101) to determine whether or not the audio buffer remaining amount is a threshold value $B_{A\text{-}th}$ (S102). When the buffer remaining amount is less than the threshold value $B_{A\text{-}th}$ or will become less than the threshold value $B_{A\text{-}th}$ in 100 ms (No/almost No), reading of audio data is started (S105). When the audio buffer remaining amount is equal to or more than the threshold value $B_{A\text{-}th}$ (Otherwise in S102), if the video buffer remaining amount is 1/3 Bv or less or will become 1/3 Bv or less in 100 ms (No/almost No in S103), reading of video data is started (S106). When the video buffer remaining amount is equal to or more than 1/3 Bv (Otherwise in S103), and 2/3 Bv or less (Yes/almost Yes in S104), reading of video data is started (S107).

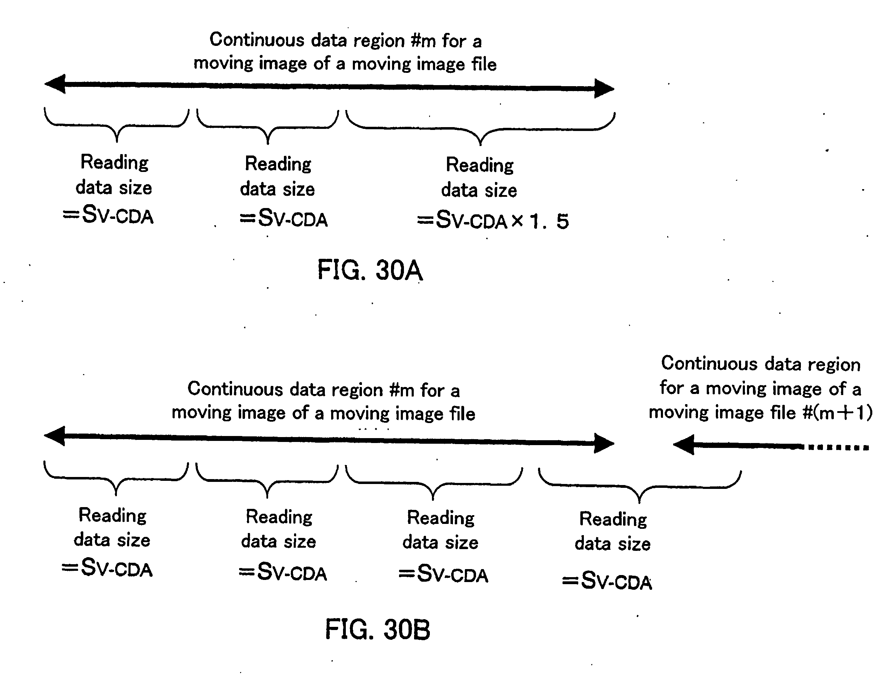

FIG. 30 shows an example of the reading data size of one continuous data region. For example, the case where reading is performed twice from the leading end at a minimum value, and then, the data size that is 1.5 times the minimum value is read will be shown (FIG. 30A). The reason why the data size of the last one is longer is as follows: if reading is divided to four of a fixed reading amount ($S_{V\text{-}CDA}$), the last fourth data size becomes smaller than the minimum value. In order to keep a fixed reading amount, it also is necessary to read leading data in a subsequent continuous data region # (m+1) (FIG. 30B). In this case, a seek operation occurs, so that a video is interrupted during post-recording reproduction.

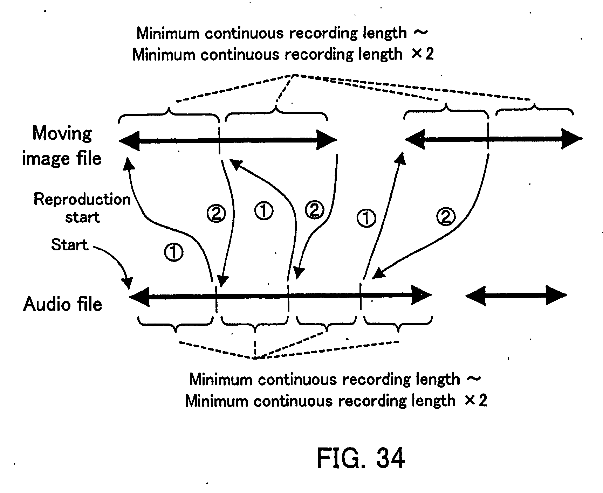

FIG. 34 is a diagram showing the data reading order and reading data amount during post-recording reproduction. One reading amount of moving image data may be equal to or more than the minimum continuous recording length for a moving image and less than the twice the minimum continuous recording length. Furthermore, similarly, one reading amount of audio data may be equal to or more than the minimum continuous recording length for an audio and less than the twice the minimum continuous recording length.

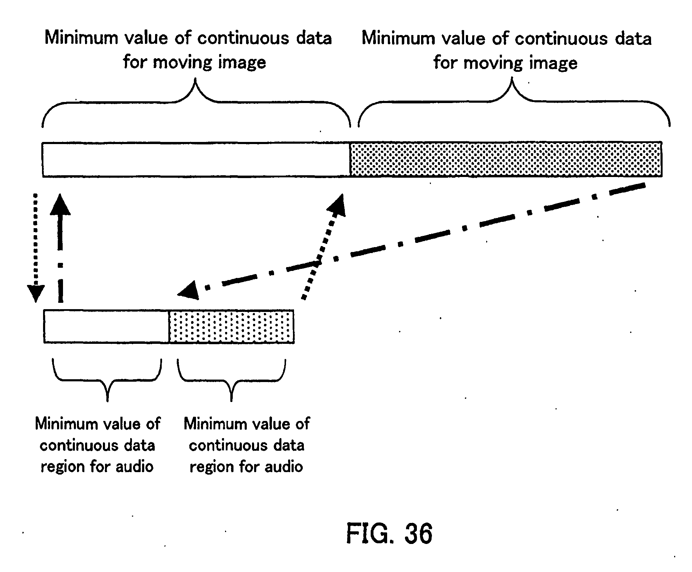

FIG. 36 is a diagram showing the concept of the continuous data region. The minimum continuous data region for a moving image contains video data corresponding to the total time of a time required for reading the continuous data region for an audio that is twice the minimum, and a maximum seek time for two readings. On the other hand, the minimum continuous data region for an audio contains audio data corresponding to the total time of a time required for reading a continuous data region for a moving image that is twice the minimum and a maximum seek time for two readings.

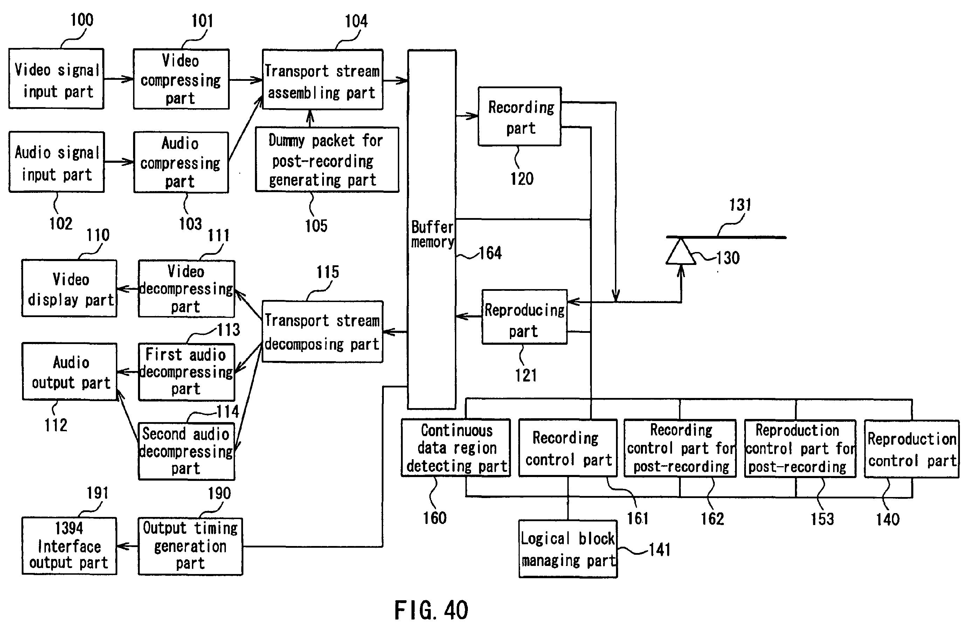

FIG. 40 shows scheduling information that can be referred to during post-recording reproduction.

In FIG. 29, a minimum value ($S_{V\text{-}CDA}$) in the continuous data region for a moving image and a minimum value ($S_{A\text{-}CDA}$) in the continuous data region for an audio are obtained as follows.

$$(Vr\text{-}Vout)t_{V\text{-}CDA} = 2\ Vout \times (2t_{seek} + t_{A\text{-}CDA}) \tag{13}$$

$$(Ar\text{-}Aout)t_{A\text{-}CDA} = 2\ Aout \times t_{Aout} \tag{14}$$

$$t_{Aout} = t_{V\text{-}CDA} + 2t_{seek} \tag{15}$$

From the above Expressions, $t_{A\text{-}CDA}$ is presented by the following Expression (16):

$$t_{A\text{-}CDA} = (4t_{seek} \times Aout(Vr+Vout))/((Vr\text{-}Vout)(Ar\text{-}Aout) - 4Aout \times Vout) \tag{16}$$

Furthermore, since Vr = Ar

$$t_{A\text{-}CDA} = (4t_{seek} \times Aout(1+Vr)/(Vr\text{-}Vout\text{-}Aout\text{-}3 \times Aout \times Vout/Vr) \tag{28}$$

Furthermore,

$$S_{V-CDA} = Vr \times t_{V-CDA}/2 \tag{17}$$

$$S_{A-CDA} = Ar \times t_{A-CDA}/2 \tag{18}$$

Herein, it is assumed that the data size of the continuous data region for a video is an arbitrary value of $S_{V-CDA}$ or more. Furthermore, it is assumed that the data size of the continuous data region for a back-audio is an arbitrary value of $S_{A-CDA}$ or more.

During post recording reproduction, a back-audio file and a moving image file are read alternately. The minimum value of the amount to be read at a time is at least $S_{A-CDA}$ and at most twice thereof, in the case of a back-audio file. The minimum value of the amount to be read at a time is at least $S_{V-CDA}$ and at most twice thereof, in the case of a moving image file.

Due to the above-mentioned configuration, the minimum value ($S_{V-CDA}$) of the data size of the continuous data region for realizing post-recording recording and post-recording reproduction can be set to be about 2/3, compared with Embodiment 1. Because of this, for example, even in the case where the order is determined by a play list such as SMIL, the time interval from an IN point to an OUT point can be reduced.

In Embodiment 5, the data size of the continuous data region for a moving image file is set to be a predetermined size or more. However, the data sizes of the leading and trailing continuous data regions for a moving image file are not limited thereto. The reason for this is as follows. For example, in the case of deleting the leading portion of a moving image file, the data size of the remaining continuous data region may be smaller than a predetermined data size. Even in the case where the data size of a predetermined continuous data region is short, by increasing the reading of data immediately before the commencement of reproduction, continuous reproduction of one moving image file is not influenced.

In Embodiment 5, the exemplary way of reading data has been shown in FIG. 30. The following reading also may be performed. While the code amount of a video buffer is made full as soon as possible, audio data is read preferentially immediately before audio data becomes insufficient. Even in this case, the same way of reading as that in FIG. 30 can be performed with respect to audio data.

(Embodiment 6)

Embodiment 6 of the present invention differs from Embodiment 1 in that two seek operations are assumed.

Furthermore, Embodiment 6 of the present invention differs from Embodiment 5 in that the data size of the continuous data region for moving image data and audio data is an integral multiple of the minimum data size, and in that the data reading amount is equal to the minimum data size.

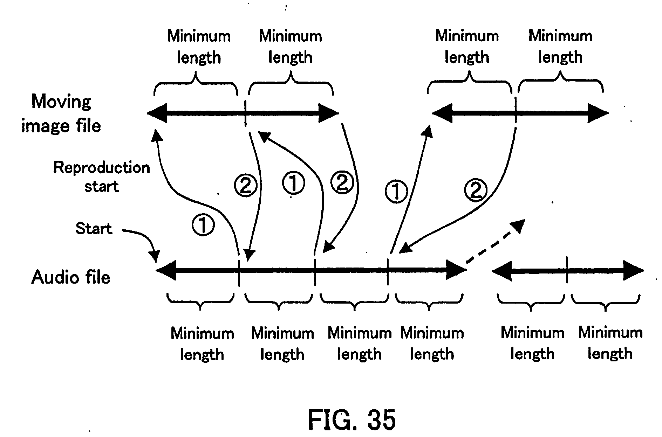

FIG. 35 shows the reading order and reading data size of moving image data and audio data. The reading data amount of moving image data always is a predetermined value (minimum length in the continuous data region for a moving image). Also, the reading data amount of audio data always is at a predetermined value (minimum length of the continuous data region for an audio).

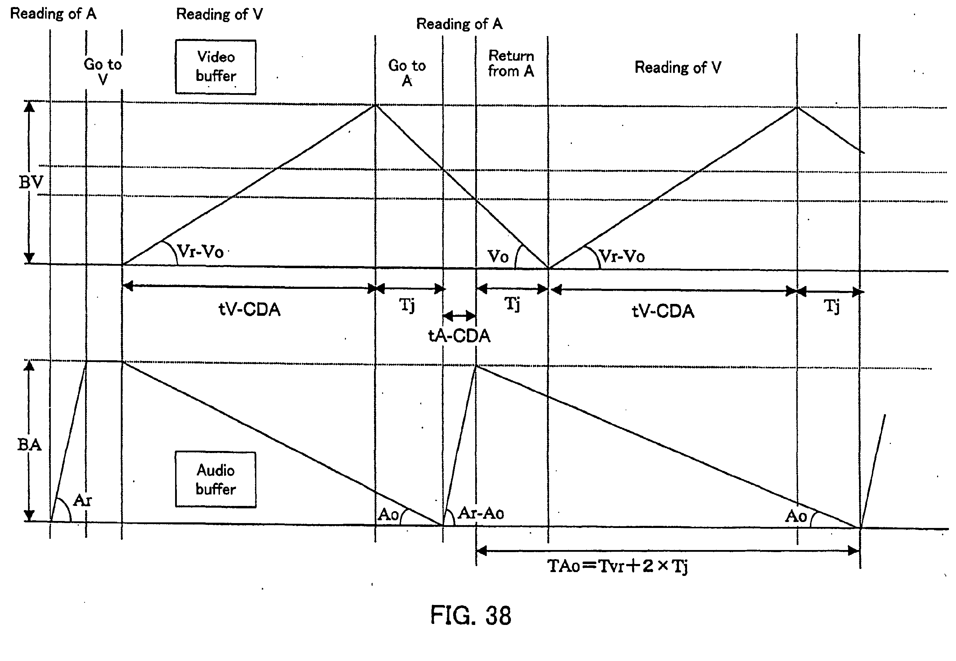

FIG. 38 shows the reading timing of moving image data and audio data.

Furthermore, the following Expressions (19) to (24) are relationship expressions related to the present embodiment.

$$(Vr-Vout)t_{V-CDA} = Vout \times (2t_{seek}+t_{A-CDA}) \tag{19}$$

$$(Ar-Aout)t_{A-CDA} = Aout \times t_{Aout} \tag{20}$$

$$t_{Aout} = t_{V-CDA} + 2t_{seek} \tag{21}$$

$$S_{V-CDA} = Vr \times t_{V-CDA} \tag{22}$$

$$S_{A-CDA} = Ar \times t_{A-CDA} \tag{23}$$

$$t_{\text{A-CDA}} = (2t_{\text{seek}} \times \text{Aout})/(\text{Vr-Vout-Aout}) \qquad\qquad (24)$$

Because of the above configuration, post-recording recording/reproduction can be performed. The feature of the present embodiment lies in that the data size of the continuous data region for a moving image file is smaller than that in Embodiments 1 and 5. However, in the case of deleting an intermediate portion of a moving image file for editing, after recording a moving image file and a back-audio file, a video is likely to be frozen during post-recording reproduction. Alternatively, audio data is lost.

(Embodiment 7)

Embodiment 7 of the present invention differs from Embodiment 1 in that the result of post-recording reproduction of an audio/video information recording and reproducing apparatus is output via an IEEE 1394 interface.

FIG. 40 is a block diagram showing a functional configuration of an audio/video information recording and reproducing apparatus according to the present embodiment. In FIG. 40, during post-recording reproduction, a reproduction control part 153 for post-recording reads a moving image file and a back-audio file via a pickup 130 and a reproducing part 121, and replaces a back-audio packet (D_TSP) of a moving image file by an audio packet (A_TSP) of a back-audio file using a buffer memory 164. The replaced moving image stream is sent to a transport stream decomposing part 115, reproduced, simultaneously sent to an output timing generating part 190 and a 1394 interface output part 191, and reproduced on an external equipment side.

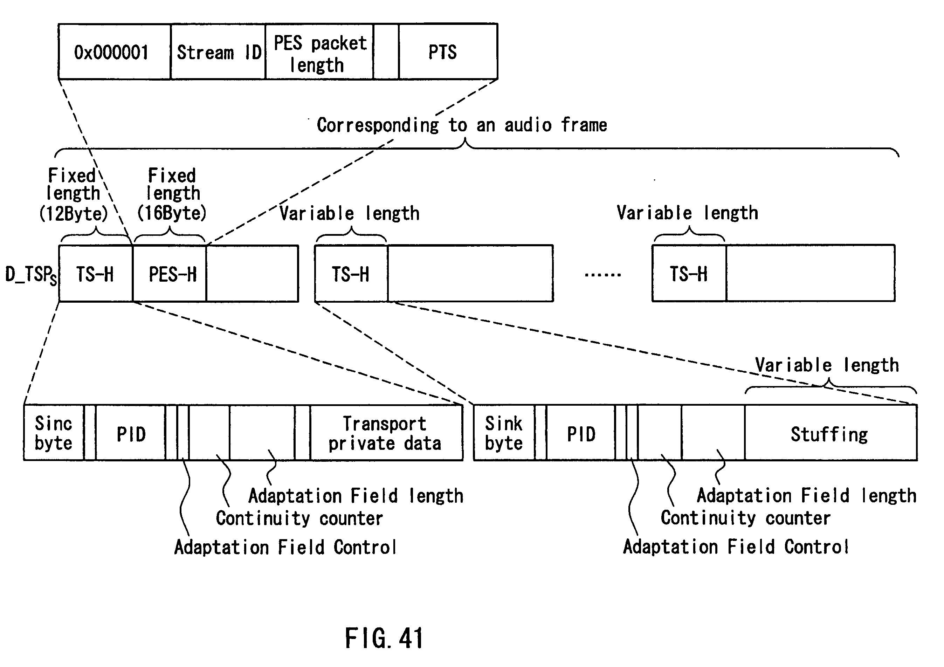

FIG. 41 shows a data configuration of D_TSP of a moving image file.

In FIG. 41, one audio frame is contained in one PES packet, and this PES packet is contained in a fixed number (e.g., 3) of transport packets. If one audio frame has a variable data size, by providing a stuffing data region in transport packet headers other than the first transport packet header, all the audio frames are composed of a fixed number of transport packets. Simultaneously, audio compression is performed so that the data size of one audio frame does not exceed the fixed number of transport packets. Furthermore, it is assumed that D_TSP does not contain a PCR (Program Clock Reference), and for example, V_TSP contains a PCR. Among the transport packets constituting one frame, a transport packet header (TS-H in FIG. 41) and a PES header (PES-H in FIG. 41) in the first transport packet are assumed to have a fixed data size over the entire D_TSP. Furthermore, the PES header is assumed to inevitably contain a PTS (Presentation Time Stamp). Furthermore, on an audio frame basis, the data sizes of the second and subsequent transport packet headers may be varied.

Furthermore, front-audio data A_TSP contained in a moving image file also has the same configuration as that of D_TSP in FIG. 41.

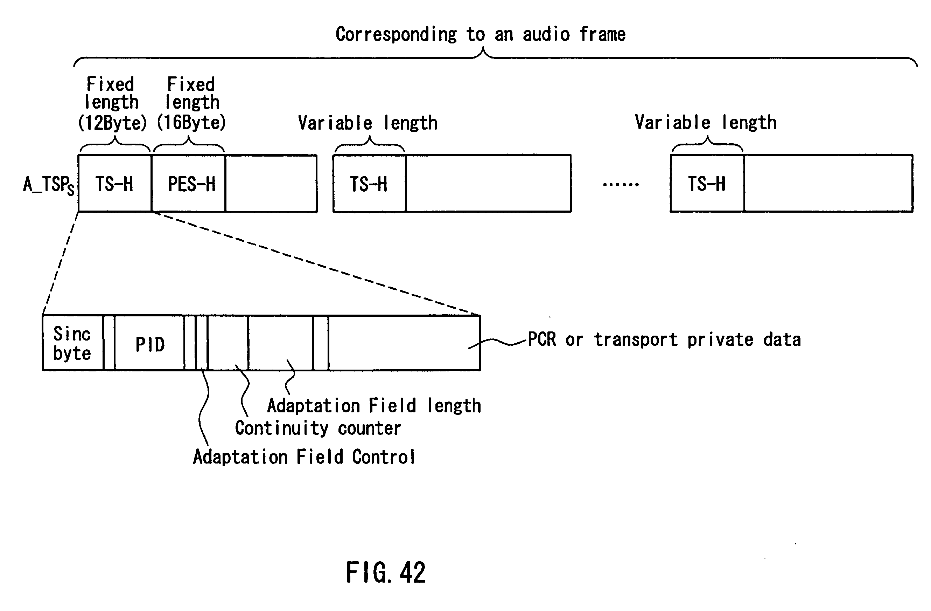

FIG. 42 shows a data configuration of A_TSP of a back-audio file. FIG. 42 differs from FIG. 41 in that, among the transport packets constituting one frame, a PCR is contained in the transport packet headers in the first transport packet. A PCR is contained at a frequency of 0.1 seconds or less in accordance with the MPEG standard. In the case where a PCR is not contained, transport private data is contained instead. Furthermore, among the transport packets constituting one frame, the lengths of the second and subsequent transport packet headers may be different from that of the transport packet at a corresponding position (for example, this means two corresponding transport packets, three corresponding transport packets, etc.) in FIG. 41. Furthermore, on an audio frame basis, the data sizes of the second and subsequent transport packet headers may be varied.

On the other hand, the data size of the first transport packet header and the data size of the PES header are the same as the respective data sizes (12 bytes, 16 bytes) of D_TSP. It is assumed that the data configurations of both the headers also are the same except that a PCR is contained. Furthermore, the number of transport packets constituting one audio frame is the same as that of D_TSP.

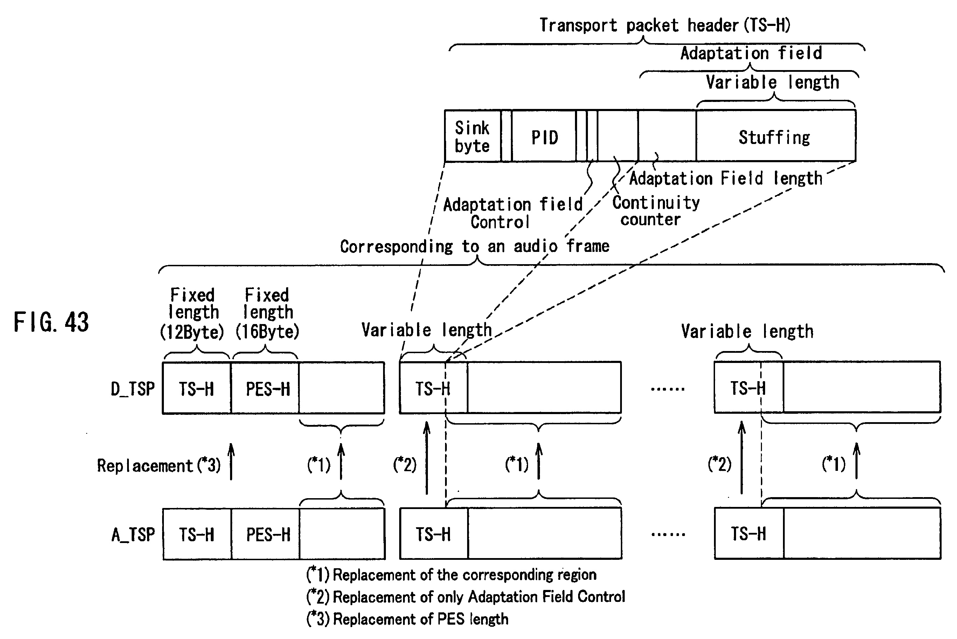

FIG. 43 shows a method for replacing a partial region of D_TSP with A_TSP constituting a back-audio file. In FIG. 43, regarding the first transport packet constituting one frame, a payload of A_TSP is overwritten on a payload of D_TSP. Regarding the second and subsequent transport packets, the portion other than an Adaptation Field Control Field in the transport packet header and a payload portion of D_TSP are replaced with a portion at the corresponding same byte position of A_TSP. In this case, for example, even in the case where the transport packet header length of the second transport packet of D_TSP differs from the header length of A_TSP, the portion at the corresponding same byte position of A_TSP is overwritten on a portion other than the adaptation field control field in the transport packet header of D_TSP. Furthermore, simultaneously, the portion at the same corresponding byte position of A_TSP is overwritten on the payload portion of D_TSP.

During post-recording reproduction, the reproduction control part 153 for post-recording shown in FIG. 40 reads a moving image file and a back-audio file alternately, and replaces D_TSP of a moving image file with A_TSP of a back-audio file, as shown in FIG. 44. The replaced moving image stream is sent to the transport stream decomposing part 115 and the output timing generating part 190, and finally reproduced and output to the IEEE 1394 interface. AV equipment (e.g., a digital TV, a set-top box) connected via the IEEE 1394 interface decodes a video, a front-audio, and a back-audio simultaneously, whereby post-recording is performed.

As described above, according to Embodiment 7, during post-recording reproduction, a moving image stream containing a front-audio and a back-audio can be output to the IEEE 1394 interface easily. Furthermore, when a moving image file is combined with a back-audio file, MPEG system encoding, provision of a time stamp (PCR, PTS, DTS) and a continuity counter, buffer simulation for T_STD compliance, and the like are not required. Therefore, a moving image file can be combined with a back-audio file very easily.

In Embodiment 7, D_TSP contained in a moving image file is replaced with A_TSP of a back-audio file using a buffer memory. A_TSP of a front-audio contained in a moving image file may be replaced with A_TSP of a back-audio file.

Furthermore, in Embodiment 7, D_TSP contained in a moving image file is replaced with A_TSP of a back-audio file using a buffer memory. The following also may be performed. A_TSP of a front-audio and A_TSP of a back-audio file contained in a moving image file are once decoded, and averaged, followed by compression in the same way as in A_TSP shown in FIG. 42. The data thus obtained is replaced with A_TSP of a moving image file. Because of this, even if simultaneous decoding of a front-audio and a back-audio is not possible on a receiving side of the IEEE 1394 stream, post-recording reproduction can be performed.

In each embodiment, although a storage medium is a phase change optical disc, the present invention is not limited thereto. Any media may be used as long as they are recording media having a disc shape such as an optical disc (e.g., DVD-RAM, MO, DVD-R, DVD-RW, DVD+RW, CD-R, CD-RW, etc.), a hard disc, and the like. The storage medium also may be a semiconductor memory such as a flash memory.

Similarly, in each embodiment, although a pickup is used as a reading and writing head, a pickup and a magnetic head are used in the case of an MO, and a magnetic head is used in the case of a hard disk.

Furthermore, in each embodiment, a transport stream may be in the form complying with the digital broadcast standard using the MPEG. For example, the transport stream may be those which comply with the BS digital broadcast standard in Japan, those which comply with the ATSC standard in the U.S., and those which comply with the DVB standard in Europe.

Furthermore, in each embodiment, although a moving image file and an audio file are composed of a transport stream, they may be composed of a bit stream containing other multimedia information such as a program stream, a PES stream, and the like.

Furthermore, in each Embodiment, during post-recording reproduction, although only an audio file is read, a still image file in addition to an audio file may be read. In this case, the audio file and the still image file are recorded under the condition of being collected as much as possible, and they may be recorded physically in an alternate manner so that a part of the audio file and a part of the required still image file are read collectively each time, immediately after a seek operation. Furthermore, in addition to a still image file, a text file, a graphics image file, and the like may be read.

Furthermore, in each embodiment, although a logical block has 32 kbytes and a sector has 2 kbytes, for example, the logical block may have 16 kbytes and the sector may have 2 kbytes, as long as the logical block size is an integral multiple of a sector size. Furthermore, the logical block and the sector both may have 2 kbytes.

Furthermore, in each embodiment, although a video compression code and an audio compression code are an MPEG2 video compression code and an AAC compression code, they may be an MPEG1 video compression code, an MPEG4 video compression code, or the like, and an MPEG-Audio compression code, Doby, an AC3 compression code, a Twin-VQ compression code, or the like.

Furthermore, in each embodiment, although a moving image file and a back-audio file are recorded on the same optical disc, they may be recorded on different recording media. For example, the following may be possible: a moving image file is recorded on an optical disc, a back-audio file is recorded on a flash memory card, and a synthesized file is recorded on an optical disc. In this case, the chance of movement of a pickup is reduced, so that post-recording recording and post-recording reproduction can be realized very easily.

Furthermore, in each embodiment, although a file is managed by a UDF file system, it may be managed by an FAT (File Allocation Table), or other original file systems.

Furthermore, in each embodiment, in addition to a moving image file and a back-audio file, a third file for associating the moving image file with the back-audio file may be recorded. The third file may describe a simultaneous reproduction (parallel reproduction) timing of the moving image file and the back-audio file in SMIL (Synchronized Multimedia Integration Language) that is being advanced for standardization in W3C. Because of this, the relationship between the moving image file and the back-audio file can be described clearly in terms of a reproduction timing or the like. For example, by specifying the elapsed time from the leading end of a video file and the elapsed time from the leading end of an audio file, a start position for simultaneous reproduction can be specified. Furthermore, by using the SMIL language, even in the case where a moving image file, a back-audio file, and a third file are moved to a personal computer, they can be reproduced with an SMIL player or the like that is application software on the personal computer.

Furthermore, in each embodiment, in the case of recording a back-audio file by performing post-recording recording with respect to a part of a moving image file, it is necessary that time information on post-recording start timing is recorded in the back-audio file, the above-mentioned third file, or another fourth file.

Furthermore, in each embodiment, although a back-audio with respect to a moving image is recorded in a back-audio file, music (BGM, etc.) that is not related directly to a moving image in terms of timing may be recorded and reproduced by the same method as post-recording reproduction.

Furthermore, in each embodiment, although the maximum movement time of a pickup during reading is set to be the same as that during writing, they may be different. In this case, it is necessary to obtain the data size (Expressions 6 and 7) of the continuous data region and the video update time (Expression 9) by selecting a more suitable or larger maximum movement time of the pickup.

Furthermore, in each embodiment, although the unit constituting a transport stream is a transport packet of 188 bytes, the transport stream may be composed of a unit packet of 192 bytes in total by adding 4-byte transmission timing information (for example, a value expressed by a clock value of 27 MHz) immediately before the transport packet.

As described above, according to the present invention, a post-recording function can be realized on an optical disc easily even with an inexpensive disk drive having a seek time at a relatively low speed. In addition, editing such as combination and division of an audio file can be performed easily. Furthermore, by making it unnecessary to perform the MPEG system encoding in output to an IEEE 1394 interface, a moving image stream can be output easily.

**Claims**

1. An audio/video information recording and reproducing apparatus, comprising:

   a video recording part for recording video information on a recording medium as a video file:
   an audio recording part for recording audio information on the recording medium as an audio file;
   a video reproducing part for reproducing the video information recorded on the recording medium continuously in real time; and
   a recording part for post-recording for simultaneously performing reproduction of the video information and recording of the audio information related to the video information,
   the video recording part including:

      a video continuous data region detecting part for detecting a video continuous data region composed of a plurality of physically continuous recording units capable of recording video information for a period of time or longer required for keeping excessively video information corresponding to a total period of a time that is three times a maximum movement time of a reading and writing head and a reading time of one audio continuous data region; and
      a video recording control part for designating a recording unit number of the video continuous data region in which the video information is to be recorded,

   the audio recording part including:

      an audio continuous data region detecting part for detecting the audio continuous data region that is composed of the plurality of physically continuous recording units capable of recording audio information, and that has a data size in a predetermined range; and
      an audio recording control part for continuously recording the audio information on the plurality of audio continuous data regions,

   the video recording part records the video information, and
   the recording part for post-recording simultaneously performs real-time continuous reproduction of the video information and recording of the audio information, while alternately performing reproduction of the video information recorded in the video continuous data region and recording of the audio information in the audio continuous data region.

2. The audio/video information recording and reproducing apparatus according to claim 1, wherein the recording part for post-recording further records boundary information representing a boundary of the audio continuous data region together with the audio information.

EP 1 457 990 A1

3. An audio/video information recording and reproducing apparatus, comprising:

a video recording part for recording video information on a recording medium as a video file;
an audio recording part for recording audio information on the recording medium as an audio file;
a video reproducing part for reproducing the video information recorded on the recording medium continuously in real time;
an audio reproducing part for reproducing the audio information recorded on the recording medium continuously in real time; and
a reproducing part for post-recording for simultaneously performing reproduction of the video information and reproduction of the audio information related to the video information,
the video recording part including:

a video continuous data region detecting part for detecting a video continuous data region composed of a plurality of physically continuous recording units capable of recording video information for a period of time or longer required for keeping excessively video information corresponding to a total period of a time that is three times a maximum movement time of a reading and writing head and a reading time of one audio continuous data region; and
a video recording control part for designating a recording unit number of the video continuous data region in which the video information is to be recorded,

the audio recording part including:

an audio continuous data region detecting part for detecting the audio continuous data region that is composed of the plurality of physically continuous recording units capable of recording audio information, and that has a data size in a predetermined range, and
an audio recording control part for continuously recording the audio information on the plurality of audio continuous data regions,

the video recording part records the video information,
the audio recording part records the audio information related to the video information, and
the reproducing part for post-recording simultaneously reproduces the video and the audio continuously in real time, while alternately reading the video information recorded in the video continuous data region and the audio information recorded in the audio continuous data region.

4. The audio/video information recording and reproducing apparatus according to claim 3, wherein the audio recording part further records boundary information representing a boundary of the audio continuous data region together with the audio information, and
the reproducing part for post-recording further refers to the boundary information when reading the audio information recorded in the audio continuous data region.

5. An audio/video information recording and reproducing method for recording video information on a recording medium as a video file, and simultaneously performing real-time continuous reproduction of the video information recorded on the recording medium and recording of audio information related to the video information on the recording medium as an audio file, the method comprising the steps of:

detecting a video continuous data region composed of a plurality of physically continuous recording units capable of recording video information for a period of time or longer required for keeping excessively video information corresponding to a total period of a time that is three times a maximum movement time of a reading and writing head and a reading time of one audio continuous data region;
designating a recording unit number of the video continuous data region in which the video information is to be recorded;
detecting the audio continuous data region that is composed of the plurality of physically continuous recording units capable of recording audio information, and that has a data size in a predetermined range; and
continuously recording the audio information on the plurality of audio continuous data regions,

wherein real-time continuous reproduction of the video information and recording of the audio information are performed simultaneously, while reproduction of the video information recorded in the video continuous data region and recording of the audio information in the audio continuous data region are performed alternately.

24

**6.** The audio/video information recording and reproducing method according to claim 5, further comprising the step of recording boundary information representing a boundary of the audio continuous data region together with the audio information.

**7.** An audio/video information recording and reproducing method for recording video information on a recording medium as a video file, recording audio information on the recording medium as an audio file, and simultaneously reproducing the video information and the audio information recorded on the recording medium continuously in real time, the method comprising the steps of:

detecting a video continuous data region composed of a plurality of physically continuous recording units capable of recording video information for a period of time or longer required for keeping excessively video information corresponding to a total period of a time that is three times a maximum movement time of a reading and writing head and a reading time of one audio continuous data region;

designating a recording unit number of the video continuous data region in which the video information is to be recorded;

detecting the audio continuous data region that is composed of the plurality of physically continuous recording units capable of recording audio information, and that has a data size in a predetermined range; and

continuously recording the audio information on the plurality of audio continuous data regions,

wherein a video and an audio are simultaneously reproduced continuously in real-time, while the video information recorded in the video continuous data region and the audio information recorded in the audio continuous data region are read alternately.

**8.** The audio/video information recording and reproducing method according to claim 7, further comprising the steps of: recording boundary information representing a boundary of the audio continuous data region together with the audio information; and

referring to the boundary information to read the audio information recorded in the audio continuous data region.

**9.** An audio/video information recording and reproducing apparatus, comprising an audio/video information recording part for recording audio/video information containing an audio as an MPEG transport stream composed of an MPEG transport packet,

wherein, in a case of recording an audio and a video, the audio/video information recording part performs recording in such a manner that one audio frame is composed of a fixed number of transport packets containing a PES packet provided with one Presentation Time Stamp (PTS), a packet header of a leading transport packet among the fixed number of transport packets is set to be a fixed data size, and further, a Program Clock Reference (PCR) is not contained in a transport packet containing audio information, and

in a case of recording an audio, the audio/video information recording part performs recording in such a manner that one audio frame is composed of the fixed number of transport packets containing one PES packet, a packet header of a leading transport packet among the fixed number of transport packets is set to be a fixed data size, and the packet header contains the PCR at a predetermined period.

**10.** An audio/video information recording and reproducing apparatus, comprising:

an audio A recording part for performing recording in such a manner that one audio frame is composed of a fixed number of transport packets containing a PES packet provided with one Presentation Time Stamp (PTS), a packet header of a leading transport packet among the fixed number of transport packets is set to be a fixed data size, and further, a Program Clock Reference (PCR) is not contained in a transport packet containing audio information;

an audio B recording part for performing recording in such a manner that one audio frame is composed of the fixed number of transport packets containing one PES packet, a packet header of a leading transport packet among the fixed number of transport packets is set to be a fixed data size, and the packet header contains the PCR at a predetermined period; and

a control part for post-recording for outputting an MPEG transport stream containing the audio A by replacing it with an audio B contained in another transport stream,

wherein the control part for post-recording outputs a predetermined data region among the transport packets containing the audio A by replacing the predetermined data region with data at a recording position corresponding to the transport packet of the audio B in synchronization with a leading end of each audio frame.

11. The audio/video information recording and reproducing apparatus according to claim 10, wherein the predetermined data region is a PES packet length field and payload part of the first transport packet, and an Adaptation Field Control Field, Adaptation Field, and payload part of the second and subsequent transport packets, among the fixed number of transport packets.

12. An audio/video information recording and reproducing method for recording audio/video information containing an audio as an MPEG transport stream composed of an MPEG transport packet,
    wherein, in a case of recording an audio and a video, recording is performed in such a manner that one audio frame is composed of a fixed number of transport packets containing a PES packet provided with one Presentation Time Stamp (PTS), a packet header of a leading transport packet among the fixed number of transport packets is set to be a fixed data size, and further, a Program Clock Reference (PCR) is not contained in a transport packet containing audio information, and
    in a case of recording an audio, recording is performed in such a manner that one audio frame is composed of the fixed number of transport packets containing one PES packet, a packet header of a leading transport packet among the fixed number of transport packets is set to be a fixed data size, and the packet header contains the PCR at a predetermined period.

13. An audio/video information recording and reproducing method, comprising the steps of:

    performing recording in such a manner that one audio frame is composed of a fixed number of transport packets containing a PES packet provided with one Presentation Time Stamp (PTS), a packet header of a leading transport packet among the fixed number of transport packets is set to be a fixed data size, and further, a Program Clock Reference (PCR) is not contained in a transport packet containing audio information;
    performing recording in such a manner that one audio frame is composed of the fixed number of transport packets containing one PES packet, a packet header of a leading transport packet among the fixed number of transport packets is set to be a fixed data size, and the packet header contains the PCR at a predetermined period; and
    outputting a predetermined data region among the transport packets of an MPEG transport stream containing an audio A by replacing the predetermined data region with data at a recording position corresponding to the transport packet of an audio B contained in another transport stream in synchronization with a leading end of each audio frame.

14. The audio/video information recording and reproducing method according to claim 13, wherein the predetermined data region is a payload part of the first transport packet, and an Adaptation Field Control Field, Adaptation Field, and payload part of the second and subsequent transport packets, among the fixed number of transport packets.

15. A recording medium on which information is recorded using an audio/video information recording and reproducing apparatus comprising: a video recording part for recording video information on a recording medium as a video file; an audio recording part for recording audio information on the recording medium as an audio file; a video reproducing part for reproducing the video information recorded on the recording medium continuously in real time; and a recording part for post-recording for simultaneously performing reproduction of the video information and recording of the audio information related to the video information,
    the video recording part including:

    a video continuous data region detecting part for detecting a video continuous data region composed of a plurality of physically continuous recording units capable of recording video information for a period of time or longer required for keeping excessively video information corresponding to a total period of a time that is three times a maximum movement time of a reading and writing head and a reading time of one audio continuous data region; and
    a video recording control part for designating a recording unit number of the video continuous data region in which the video information is to be recorded,
        the audio recording part including:

        an audio continuous data region detecting part for detecting the audio continuous data region that is composed of the plurality of physically continuous recording units capable of recording audio information, and that has a data size in a predetermined range; and

an audio recording control part for continuously recording the audio information on the plurality of audio continuous data regions,

the video recording part records the video information, and
the recording part for post-recording simultaneously performs real-time continuous reproduction of the video information and recording of the audio information, while alternately performing reproduction of the video information recorded in the video continuous data region and recording of the audio information in the audio continuous data region.

**16.** A recording medium on which information is recorded using an audio/video information recording and reproducing apparatus comprising: a video recording part for recording video information on a recording medium as a video file; an audio recording part for recording audio information on the recording medium as an audio file; a video reproducing part for reproducing the video information recorded on the recording medium continuously in real time; an audio reproducing part for reproducing the audio information recorded on the recording medium continuously in real time; and a reproducing part for post-recording for simultaneously performing reproduction of the video information and reproduction of the audio information related to the video information,
the video recording part including:

a video continuous data region detecting part for detecting a video continuous data region composed of a plurality of physically continuous recording units capable of recording video information for a period of time or longer required for keeping excessively video information corresponding to a total period of a time that is three times a maximum movement time of a reading and writing head and a reading time of one audio continuous data region; and
a video recording control part for designating a recording unit number of the video continuous data region in which the video information is to be recorded,

the audio recording part including:

an audio continuous data region detecting part for detecting the audio continuous data region that is composed of the plurality of physically continuous recording units capable of recording audio information, and that has a data size in a predetermined range; and
an audio recording control part for continuously recording the audio information on the plurality of audio continuous data regions,

the video recording part records the video information,
the audio recording part records the audio information related to the video information, and
the reproducing part for post-recording simultaneously reproduces the video and the audio continuously in real time, while alternately reading the video information recorded in the video continuous data region and the audio information recorded in the audio continuous data region.

**17.** A recording medium on which information is recorded using an audio/video information recording and reproducing method for recording video information on a recording medium as a video file, and simultaneously performing real-time continuous reproduction of the video information recorded on the recording medium and recording of audio information related to the video information on the recording medium as an audio file, the method comprising the steps of:

detecting a video continuous data region composed of a plurality of physically continuous recording units capable of recording video information for a period of time or longer required for keeping excessively video information corresponding to a total period of a time that is three times a maximum movement time of a reading and writing head and a reading time of one audio continuous data region;
designating a recording unit number of the video continuous data region in which the video information is to be recorded,
detecting the audio continuous data region that is composed of the plurality of physically continuous recording units capable of recording audio information, and that has a data size in a predetermined range; and
continuously recording the audio information on the plurality of audio continuous data regions,

wherein real-time continuous reproduction of the video information and recording of the audio information are performed simultaneously, while reproduction of the video information recorded in the video continuous data region and recording of the audio information in the audio continuous data region are performed alternately.

18. A recording medium on which information is recorded using an audio/video information recording and reproducing method for recording video information on a recording medium as a video file, recording audio information on the recording medium as an audio file, and simultaneously reproducing the video information and the audio information recorded on the recording medium continuously in real time, the method comprising the steps of:

detecting a video continuous data region composed of a plurality of physically continuous recording units capable of recording video information for a period of time or longer required for keeping excessively video information corresponding to a total period of a time that is three times a maximum movement time of a reading and writing head and a reading time of one audio continuous data region;
designating a recording unit number of the video continuous data region in which the video information is to be recorded,
detecting the audio continuous data region that is composed of the plurality of physically continuous recording units capable of recording audio information, and that has a data size in a predetermined range; and
continuously recording the audio information on the plurality of audio continuous data regions,

wherein a video and an audio are simultaneously reproduced continuously in real-time, while the video information recorded in the video continuous data region and the audio information recorded in the audio continuous data region are read alternately.

19. A recording medium on which information is recorded using an audio/video information recording and reproducing apparatus comprising an audio/video information recording part for recording audio/video information containing an audio as an MPEG transport stream composed of an MPEG transport packet,
wherein, in a case of recording an audio and a video, the audio/video information recording part performs recording in such a manner that one audio frame is composed of a fixed number of transport packets containing a PES packet provided with one Presentation Time Stamp (PTS), a packet header of a leading transport packet among the fixed number of transport packets is set to be a fixed data size, and further, a Program Clock Reference (PCR) is not contained in a transport packet containing audio information, and
in a case of recording an audio, the audio/video information recording part performs recording in such a manner that one audio frame is composed of the fixed number of transport packets containing one PES packet, a packet header of a leading transport packet among the fixed number of transport packets is set to be a fixed data size, and the packet header contains the PCR at a predetermined period.

20. A recording medium on which information is recorded using an audio/video information recording and reproducing apparatus comprising: an audio A recording part for performing recording in such a manner that one audio frame is composed of a fixed number of transport packets containing a PES packet provided with one Presentation Time Stamp (PTS), a packet header of a leading transport packet among the fixed number of transport packets is set to be a fixed data size, and further, a Program Clock Reference (PCR) is not contained in a transport packet containing audio information; an audio B recording part for performing recording in such a manner that one audio frame is composed of the fixed number of transport packets containing one PES packet, a packet header of a leading transport packet among the fixed number of transport packets is set to be a fixed data size, and the packet header contains the PCR at a predetermined period; and a control part for post-recording for outputting an MPEG transport stream containing the audio A by replacing it with an audio B contained in another transport stream, wherein the control part for post-recording outputs a predetermined data region among the transport packets containing the audio A by replacing the predetermined data region with data at a recording position corresponding to the transport packet of the audio B in synchronization with a leading end of each audio frame.

21. A recording medium on which information is recorded using an audio/video information recording and reproducing method for recording audio/video information containing an audio as an MPEG transport stream composed of an MPEG transport packet,
the audio/video information recording and reproducing method including the steps of: in a case of recording an audio and a video, performing recording in such a manner that one audio frame is composed of a fixed number of transport packets containing a PES packet provided with one Presentation Time Stamp (PTS), a packet header of a leading transport packet among the fixed number of transport packets is set to be a fixed data size, and further, a Program Clock Reference (PCR) is not contained in a transport packet containing audio information, and
in a case of recording an audio, performing recording in such a manner that one audio frame is composed of the fixed number of transport packets containing one PES packet, a packet header of a leading transport packet among the fixed number of transport packets is set to be a fixed data size, and the packet header contains the PCR at a predetermined period.

22. A recording medium on which information is recorded using an audio/video information recording and reproducing method comprising the steps of: performing recording in such a manner that one audio frame is composed of a fixed number of transport packets containing a PES packet provided with one Presentation Time Stamp (PTS), a packet header of a leading transport packet among the fixed number of transport packets is set to be a fixed data size, and further, a Program Clock Reference (PCR) is not contained in a transport packet containing audio information; performing recording in such a manner that one audio frame is composed of the fixed number of transport packets containing one PES packet, a packet header of a leading transport packet among the fixed number of transport packets is set to be a fixed data size, and the packet header contains the PCR at a predetermined period; and outputting a predetermined data region among the transport packets of an MPEG transport stream containing an audio A by replacing the predetermined data region with data at a recording position corresponding to the transport packet of an audio B contained in another transport stream in synchronization with a leading end of each audio frame.

EP 1 457 990 A1

FIG. 1

FIG. 2

EP 1 457 990 A1

EP 1 457 990 A1

```
                                              104

    102              103          ┌─────────────┐
┌───────────┐    ┌───────────┐    │Transport stream│
│Audio signal│──▶│   Audio   │───▶│assembling part │──▶
│ input part │    │compressing│    └─────────────┘
└───────────┘    │   part    │
                 └───────────┘
```

                                         ┌────────┐      ┌──────────┐
                                         │        │─────▶│Recording │
                                         │        │      │  part    │
                                         │        │      └──────────┘
                                         │ Buffer │         120
   110          111                      │ memory │
┌─────────┐  ┌───────────┐               │    ~164 │                      131
│  Video  │◀─│   Video   │               │        │                   130
│ display │  │decompressing│             │        │      ┌──────────┐
│  part   │  │   part    │      165      │        │◀─────│Reproducing│
└─────────┘  └───────────┘   ┌─────────┐ │        │      │   part   │
                             │  First  │ │        │      └──────────┘
┌─────────┐  ┌───────────┐   │transport│ │        │         121
│  Audio  │◀─│First audio│◀──│ stream  │◀│        │
│ output  │  │decompressing│ │decomposing│        │
│  part   │  │   part    │   │  part   │ └────────┘
└─────────┘  └───────────┘   └─────────┘
   112          113

                    ┌──────────────┐              ┌──────────────┐
                    │  Continuous  │              │  Recording   │
                    │ data region  │              │control part for│
                    │detecting part│              │post-recording │
                    └──────────────┘              └──────────────┘
                         160                            162

                           ┌──────────────┐
                           │Logical block │~141
                           │managing part │
                           └──────────────┘

FIG. 3

FIG. 4

EP 1 457 990 A1

| MPEG transport stream |
|---|

0.4~1 seconds

| Video Object Unit (VOBU) | Video Object Unit (VOBU) | . . . | Video Object Unit (VOBU) |
|---|---|---|---|

188Byte

| V_TSP | V_TSP | A_TSP | D_TSP | . . . | V_TSP | A_TSP | D_TSP |
|---|---|---|---|---|---|---|---|

2.6 seconds or more (3.3 MBytes or more)

| Continuous data region | . . . |
|---|---|

32kByte

| Logical block | Logical block | . . . | Logical block |
|---|---|---|---|

2kByte

| Sector | Sector | . . . | Sector |
|---|---|---|---|

FIG. 5

FIG. 6

```
                 111                        165                                               Vr
          ┌──────────────┐        ┌──────────────────┐    Vout  │ ┌──────────────────┐     │
          │     Video    │ ◄───── │ Transport stream │ ◄─────── │ │  Moving image    │ ◄───┤
          │decompressing part│    │ decomposing part │          │ │  buffer memory   │     │
          └──────────────┘        └──────────────────┘          │ └──────────────────┘     │
                                           ▲                    │                          │
          ┌──────────────┐        ┌──────────────────┐    Ain   │ ┌──────────────────┐  Aw │
          │  First audio │        │ Transport stream │ ──────►  │ │      Audio       │     │
          │decompressing part│ ◄──│ assembling part  │          │ │  buffer memory   │ ───┐│
          └──────────────┘        └──────────────────┘          │ └──────────────────┘    ││
                 113                      ▲   104               └────────────────────────┘ ││
          ┌──────────────┐                │                            130                 ││
          │    Audio     │ ───────────────┘                    164                         ││
          │compressing part│                                                               ▽▽
          └──────────────┘                                                              130
                 103                                                                       131
```

FIG. 7

FIG. 8

Code amount of
moving image buffer

Code amount of
audio buffer

Writing
of audio

Go to A | Return from A | Seek in V

(1) | (2) | (3) | (4) | (5) | (6)

tv-CDA | tseek | tAwrite | tseek | tseek | Time

Vr–Vout | Vr–Vout | Vout

BA–th | Ain or less | Aw | Ain or less

Ain or less | Time

FIG. 9

FIG. 10

FIG. 11

FIG. 12

FIG. 13

EP 1 457 990 A1

FIG. 14

Video signal input part 100 → Video compressing part 101 → Transport stream assembling part 104 → Buffer memory 164 → Recording part 120 → 131/130

Audio signal input part 102 → Audio compressing part 103 → Transport stream assembling part 104

Dummy packet for post-recording generating part 105

Reproducing part 121

Transport stream decomposing part 115 → Video decompressing part 111 → Video display part 110

First audio decompressing part 113 → Audio output part 112

Second audio decompressing part 114

Post-recording MIX control part 180

Continuous data region detecting part 160

Recording control part 161

Logical block managing part 141

Recording control part for post-recording 162

Reproduction control part for post-recording 153

Reproduction control part 140

EP 1 457 990 A1

FIG. 15

FIG. 16

EP 1 457 990 A1

EP 1 457 990 A1

| MPEG transport stream |
|---|

0.4~1 seconds

| Video Object Unit (VOBU) | Video Object Unit (VOBU) | ... | Video Object Unit (VOBU) |
|---|---|---|---|

188Byte

| V_TSP | V_TSP | A_TSP | D_TSP | ... | V_TSP | A_TSP | D_TSP |
|---|---|---|---|---|---|---|---|

0.86 seconds or more

| Continuous data region | ... |
|---|---|

32kByte

| Logical block | Logical block | ... | Logical block |
|---|---|---|---|

2kByte

| Sector | Sector | ... | Sector |
|---|---|---|---|

FIG. 17

EP 1 457 990 A1

| MPEG transport stream |
|---|

| Video Object Unit (VOBU) | Video Object Unit (VOBU) | . . . | Video Object Unit (VOBU) |
|---|---|---|---|

188Byte

| V_TSP | V_TSP | A_TSP | D_TSP | • • • | V_TSP | A_TSP | D_TSP |
|---|---|---|---|---|---|---|---|

V_TSP

| Transport packet header (PID=0x0020) | Video data |
|---|---|

A_TSP

| Transport packet header (PID=0x0021) | Audio data |
|---|---|

D_TSP

| Transport packet header (PID=0x0022) | Dummy data for back audio |
|---|---|

FIG. 18

Logical block number

FID

File identifier=
'MOVIE.MPG'

ICB

File entry

Allocation Descriptor a
Allocation Descriptor b
Allocation Descriptor c

Logical block number

Continuous
data region a

Defective
Logical block

Continuous
data region b

PC file

Continuous
data region c

Not assigned

FIG. 19

| Allocation Descriptor | Extent length |
|---|---|
| | Extent position |

FIG. 20

111

Video
decompressing part

115

Transport stream
decomposing part

Vo

154

buffer memory

Vr

First audio
decompressing part

113

130

131

FIG. 21

FIG. 22

FIG. 23

EP 1 457 990 A1

EP 1 457 990 A1

Audio
reading

A
reading

Go to
V

V reading

① Go to A
② Return from A
③ Seek in V
④

Code amount of moving image buffer

$B_V$

$V_r-V_{out}$

$V_{out}$

$V_r-V_{out}$

$t_{V-CDA}$
(3)

$t_{seek}$

$t_{seek}$

$t_{seek}$

(8)

(1) (2)

(4)

$t_{A-CDA}$
(5)

(6)

(7)

Code amount of audio buffer

$A_r$

$B_A$

$B_A-th$

$A_{out}$

$A_r-A_{out}$

$A_{out}$

$t_{Aout} \geqq t_{V-CDA} + 3 \times t_{seek}$

Time

FIG. 24

| MPEG transport stream of back audio |
| --- |

188Byte

| A_TSP | • • • | A_TSP | A_TSP | • • • | A_TSP | • • • | A_TSP | • • • | A_TSP |

96kByte
(~192kByte)

| Continuous data region | Continuous data region | • • • | Continuous data region |

32kByte

| Logical block | Logical block | Logical block |

2kByte

| Sector | Sector | • • • | Sector |

FIG. 25

EP 1 457 990 A1

EP 1 457 990 A1

Moving
image file

Moving image file

Continuous data region for
a back audio (96kByte)

Continuous data region
for a moving image

Continuous data
region for a moving
image

■ ■ ■ ■      ■ ■ ■ ■

LBN

Back
audio file

MPEG transport stream of
a back audio

FIG. 26

FIG. 27

EP 1 457 990 A1

FIG. 28

FIG. 29

EP 1 457 990 A1

Continuous data region #m for a
moving image of a moving image file

Reading
data size
$=S_{V\text{-}CDA}$

Reading
data size
$=S_{V\text{-}CDA}$

Reading
data size
$=S_{V\text{-}CDA} \times 1.5$

FIG. 30A

Continuous data region #m for a
moving image of a moving image file

Continuous data region
for a moving image of a
moving image file #(m+1)

Reading
data size
$=S_{V\text{-}CDA}$

Reading
data size
$=S_{V\text{-}CDA}$

Reading
data size
$=S_{V\text{-}CDA}$

Reading
data size
$=S_{V\text{-}CDA}$

FIG. 30B

EP 1 457 990 A1

EP 1 457 990 A1

| | MPEG transport stream containing a moving image | | |
|---|---|---|---|

Moving image file

0.4 to 1 seconds

| Video Object Unit (VOBU) | Video Object Unit (VOBU) | ... | Video Object Unit (VOBU) |
|---|---|---|---|

Continuous data region

3 ECC blocks (96kByte)

Back audio file

Back audio data with respect to VOBU

MPEG transport stream containing back audio

**FIG. 31**

FIG. 32

FIG. 33

EP 1 457 990 A1

Minimum continuous recording length ~
Minimum continuous recording length ×2

Moving
image file

Reproduction
start

Start

② ① ② ① ②

①

Audio file

Minimum continuous recording length ~
Minimum continuous recording length ×2

FIG. 34

EP 1 457 990 A1

EP 1 457 990 A1

Minimum length  Minimum length  |  Minimum length  Minimum length

Moving image file

Reproduction start

Start

Audio file

① ② ① ② ① ②

Minimum length  Minimum length  Minimum length  Minimum length  |  Minimum length  Minimum length

FIG. 35

Minimum value of continuous data for moving image    Minimum value of continuous data for moving image

Minimum value of continuous data region for audio    Minimum value of continuous data region for audio

FIG. 36

EP 1 457 990 A1

EP 1 457 990 A1

Minimum value of continuous data
for moving image

Minimum value of
continuous data
region for audio

Minimum value of
continuous data
region for audio

FIG. 37

FIG. 38

Continuous data region #m for a
moving image of a moving image file

Reading
data size
= SV-CDA
×1. 17

Reading
data size
= SV-CDA
×1. 17

Reading
data size
= SV-CDA × 1. 17

FIG. 39

EP 1 457 990 A1

FIG. 40

| 0x000001 | Stream ID | PES packet length | | PTS |
|---|---|---|---|---|

Corresponding to an audio frame

Fixed length (12Byte)　　Fixed length (16Byte)　　Variable length　　　　　　　　　Variable length

D_TSP_S | TS-H | PES-H | | TS-H | | ...... | TS-H | |

Variable length

| Sinc byte | PID | | | | | Transport private data | Sink byte | PID | | | | | Stuffing |

Adaptation Field length
Continuity counter
Adaptation Field Control

Adaptation Field length
Continuity counter
Adaptation Field Control

FIG. 41

EP 1 457 990 A1

Corresponding to an audio frame

Fixed length (12Byte)　Fixed length (16Byte)　Variable length　Variable length

A_TSP$_S$ | TS-H | PES-H |  | TS-H |  | ...... | TS-H |

Sinc byte | PID |  |  |  |  | PCR or transport private data

Adaptation Field length

Continuity counter

Adaptation Field Control

FIG. 42

EP 1 457 990 A1

EP 1 457 990 A1

**FIG. 43**

Transport packet header (TS-H)

Adaptation field

Variable length

| Sink byte | PID | | | | Stuffing |

Adaptation field Control

Continuity counter

Adaptation Field length

Corresponding to an audio frame

Fixed length (12Byte)  Fixed length (16Byte)  Variable length  Variable length

D_TSP | TS-H | PES-H | | TS-H | | ······ | TS-H |

Replacement (*3)    (*1)    (*2)    (*1)    (*2)    (*1)

A_TSP | TS-H | PES-H | | TS-H | | ······ | TS-H |

(*1) Replacement of the corresponding region
(*2) Replacement of only Adaptation Field Control
(*3) Replacement of PES length

| Arbitrary data size | Minimum data size or more | | Minimum data size or more | Arbitrary data size |
|---|---|---|---|---|
| Continuous data region #0 | Continuous data region #1 | ...... | Continuous data region #10 | Continuous data region #11 |

A chain of continuous data region

## FIG. 44

FIG. 45

S101 → Check buffer remaining amount  (On 100 ms basis )

S102 → Audio buffer remaining amount > BA-th

No/almost No → S105 Read audio data

Otherwise

S103 → Video buffer remaining amount ≥ 1/3 Bv

No/almost No → S106 Read video data

Otherwise

S104 → Video buffer remaining amount ≤ 2/3 Bv

Yes/almost Yes → S107 Read video data

Otherwise

S108 → Complete processing

**FIG. 46**

| INTERNATIONAL SEARCH REPORT | International Application No |
|---|---|
| | PCT/JP02/12038 |

**A. CLASSIFICATION OF SUBJECT MATTER**
    Int.Cl⁷  G11B27/034, G11B20/10, G11B20/12, H04N5/85, H04N5/92

According to International Patent Classification (IPC) or to both national classification and IPC

**B. FIELDS SEARCHED**

Minimum documentation searched (classification system followed by classification symbols)
    Int.Cl⁷  G11B27/02-27/06, G11B20/10-20/12, H04N5/85, H04N5/92

Documentation searched other than minimum documentation to the extent that such documents are included in the fields searched
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 99/13469 A1 (Sony Corp.), 18 March, 1999 (18.03.99), Full text; all drawings & US 6219311 B1 | 1-8,15-18 |
| Y | JP 5-234084 A (Matsushita Electric Industrial Co., Ltd.), 10 September, 1993 (10.09.93), Full text; all drawings (Family: none) | 1-8,15-18 |
| A | JP 11-144383 A (Sanyo Electric Co., Ltd.), 28 May, 1999 (28.05.99), Full text; all drawings (Family: none) | 1-8,15-18 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 February, 2003 (26.02.03) | 11 March, 2003 (11.03.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

EP 1 457 990 A1

| INTERNATIONAL SEARCH REPORT | International Application No |
|---|---|
| | PCT/JP02/12038 |

**Box I   Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II   Observations where unity of invention is lacking (Continuation of item 3 of first sheet)**

This International Searching Authority found multiple inventions in this international application, as follows:

The inventions of claims 1-8, 15-18 relate to a video signal recording in which a video signal is recorded on a physically continuous region capable of recording a video signal for the total time of the head moving time and the audio signal reading time.

The inventions of claims 9-14, 19-22 relate to configuration of a transport packet not including PCR when recording an audio and a video signal and configuration including PCR when recording an audio signal.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐      The additional search fees were accompanied by the applicant's protest.

☒      No protest accompanied the payment of additional search fees.

Form PCT/ISA/210 (continuation of first sheet (1)) (July 1998)

77

## INTERNATIONAL SEARCH REPORT

| International Application No |
|---|
| PCT/JP02/12038 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 5-074048 A   (NEC Home Electronics Ltd.),<br>26 March, 1993 (26.03.93),<br>Full text; all drawings<br>(Family: none) | 1-8,15-18 |
| A | JP 2001-285793 A   (Matsushita Electric Industrial Co.,<br>Ltd.),<br>12 October, 2001 (12.10.01),<br>Full text; all drawings<br>(Family: none) | 9-14,19-22 |
| A | JP 2000-216745 A   (Victor Company Of Japan, Ltd.),<br>04 August, 2000 (04.08.00),<br>Full text; all drawings<br>(Family: none) | 9-14,19-22 |

Form PCT/ISA/210 (continuation of second sheet) (July 1998)